**Europäisches Patentamt**

**European Patent Office**

**Office européen des brevets**

(19)

(11) Numéro de publication : **0 330 561 B1**

(12)

# FASCICULE DE BREVET EUROPEEN

(45) Date de publication du fascicule du brevet :
**24.03.93 Bulletin 93/12**

(51) Int. Cl.⁵ : **H02J 7/24, H02J 7/16**

(21) Numéro de dépôt : **89400478.7**

(22) Date de dépôt : **21.02.89**

(54) **Régulateur plurifonction à cadencement synchrone de l'alternateur.**

(30) Priorité : **23.02.88 FR 8802139**
**12.04.88 FR 8804819**
**11.01.89 FR 8900267**

(43) Date de publication de la demande :
**30.08.89 Bulletin 89/35**

(45) Mention de la délivrance du brevet :
**24.03.93 Bulletin 93/12**

(84) Etats contractants désignés :
**DE IT**

(56) Documents cités :
**EP-A- 0 009 895**
**EP-A- 0 189 885**
**EP-A- 0 214 781**
**DE-A- 3 438 259**
**FR-A- 2 555 834**
**US-A- 4 584 515**
**US-A- 4 689 545**

(73) Titulaire : **VALEO EQUIPEMENTS
ELECTRIQUES MOTEUR
2, Rue André Boulle
F-94000 Creteil (FR)**

(72) Inventeur : **Pierret, Jean-Marie
24, rue Sibuet
F-75012 Paris (FR)**
Inventeur : **Michel, Didier
9, rue Pierre de Coubertin
F-94510 la Queue en Brie (FR)**

(74) Mandataire : **Martin, Jean-Jacques et al
Cabinet REGIMBEAU 26, Avenue Kléber
F-75116 Paris (FR)**

EP 0 330 561 B1

Jouve, 18, rue Saint-Denis, 75001 PARIS

## Description

L'invention est relative à un régulateur plurifonction de la tension d'excitation d'un alternateur de charge de batterie d'un véhicule automobile.

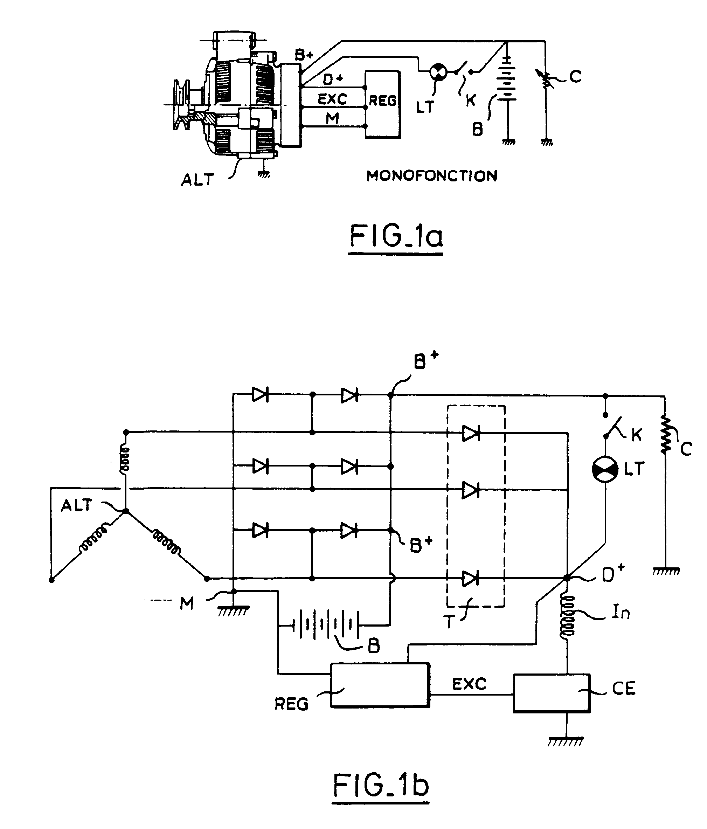

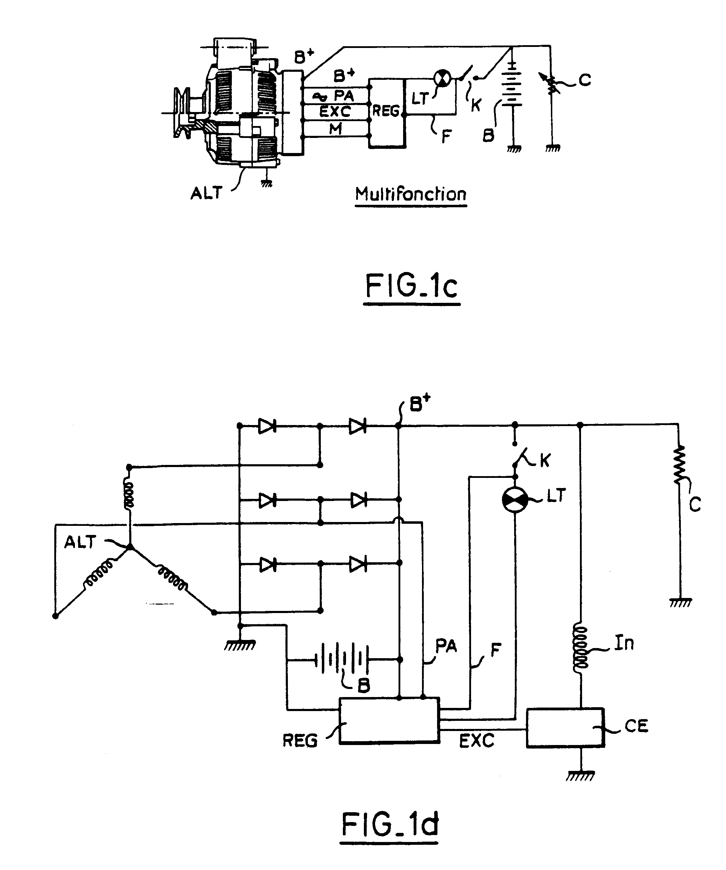

Actuellement, les régulateurs de la tension d'excitation d'un alternateur de charge de batterie d'un véhicule automobile peuvent être classés en deux grandes familles, les régulateurs dits monofonction et les régulateurs dits multifonction, tels que représentés en figures 1a, 1b, 1c, 1d, relatives à l'art antérieur.

Ainsi qu'on l'a représenté en figures 1a et 1b, pour les régulateurs monofonction, une lampe témoin LT est connectée en série avec la clef de contact K et avec l'inducteur In. Un demi-pont redresseur constitué par trois diodes de faible puissance, appelé le trio T, est connecté entre les enroulements de phase de l'alternateur ALT et la borne de lampe témoin LT non connectée à la clef de contact K. En fonctionnement normal, le potentiel redressé par le trio de diodes éteint la lampe témoin LT. Dans le cas où l'alternateur ne tourne pas, sur rupture par exemple de la courroie d'entraînement de celui-ci ou lorsque le moteur est à l'arrêt, la lampe témoin LT s'allume et conduit un courant d'intensité comprise entre 200 et 300 mA dès la fermeture de la clé de contact, l'alternateur n'étant pas en état d'excitation permettant la recharge de la batterie B, mais en état de préexcitation.

Lorsque l'alternateur ALT entre en rotation et qu'il atteint une vitesse voisine de 1 000 tours par minute, l'amorçage de l'alternateur ALT est obtenu par le passage de l'état de préexcitation créé par la lampe témoin LT à l'état d'excitation créé par l'alternateur ALT et le trio T. L'amorçage se produit lorsque la tension entre enroulements de phase de l'alternateur est supérieure à 1,2 volts. Il apparaît ainsi que dans le cas de régulateurs monofonction, la rotation de l'alternateur est détectée par le trio T, la lampe témoin LT assurant le régime de préexcitation de l'inducteur In. La borne EXC du régulateur REG délivre le courant régulé sous forme d'impulsions rectangulaires à rapport cyclique variable assurant l'excitation de l'inducteur In. La référence de tension alternateur pour le régulateur est donnée par la borne D+ du trio T par exemple.

La dénomination de régulateur monofonction résulte donc de la seule possibilité de détection de défaut de tension entre phases de l'alternateur par la lampe témoin LT et le trio T en l'absence de détection de défauts de régulation de la tension de charge de batterie tels que surtension batterie ou coupure de l'enroulement d'excitation par exemple.

Dans le cas de régulateurs multifonctions au contraire, ainsi qu'on l'a représenté en figure 1c et 1d, le trio T est supprimé et la lampe témoin LT est connectée au régulateur REG lui-même et agit comme seul témoin de défaut. La rotation de l'alternateur ALT est détectée par un fil de connexion supplémentaire reliant le régulateur REG à un enroulement de phase de l'alternateur ALT et délivrant au régulateur un signal de présence phase alternateur PA.

La lampe témoin LT peut alors détecter d'autres défauts tels qu'une surtension de batterie lorsque par exemple une excitation de l'inducteur In est réalisée en permanence sur court-circuit de l'élément de commutation commandé par le régulateur REG et délivrant normalement les impulsions de courant régulées à l'inducteur.

En outre, un fil de connexion supplémentaire noté F permet de détecter la fermeture de la clef de contact, même en cas de défaut de la lampe témoin LT. Ce fil F est installé lors de la construction du véhicule, il présente l'inconvénient d'un coût de réalisation et de production non négligeable car, de longueur importante, il assure la liaison entre organes du tableau de bord du véhicule et alternateur ou régulateur REG.

On notera en outre, que tant dans le cas des régulateurs monofonction que multifonction les régulateurs classiques ne font pas l'objet d'une intégration totale sur un même substrat, un réseau conducteur sérigraphié devant être utilisé pour assurer l'interconnexion des différents composants semi-conducteurs constituant le régulateur.

On connaît de FR-A-2 555 834 un régulateur plurifonction de la tension d'excitation d'un alternateur de charge de batterie pour véhicule automobile, comprenant au moins une borne d'entrée de tension de batterie, une borne d'entrée de tension de phase alternateur, une borne de sortie de régulation d'excitation de l'alternateur, une borne de connexion d'une lampe témoin LT normalement connectée en série avec la clef de contact K du véhicule automobile et un circuit de commande d'excitation de puissance de l'inducteur In, ledit régulateur comprenant :

- un circuit de détection du niveau de tension batterie connecté à ladite borne d'entrée de tension batterie, ledit circuit délivrant, d'une part, un signal SRAB de rupture de la liaison alternateur-batterie (load dump) et, d'autre part, un signal de régulation d'excitation SRE sur la valeur crête et la valeur moyenne de la tension batterie,
- un circuit de détection de l'amplitude de la tension de phase alternateur connecté à ladite borne d'entrée de phase alternateur, ledit circuit de détection permettant d'engendrer :
  . un premier signal de détection PSD par rapport à une première valeur de seuil VSO, correspondant

EP 0 330 561 B1

à la mise en forme non mémorisée du signal de tension de phase alternateur disponible pour de très faibles vitesses de rotation de l'alternateur,

. un deuxième signal de détection DSD par rapport à une deuxième valeur de seuil VS1 intermédiaire, ledit deuxième signal de détection DSD autorisant la mise à l'état plein champ de l'alternateur pendant le processus d'amorçage déclenché par le premier signal de détection PSD,

. un troisième signal de détection TSD par rapport à une troisième valeur de seuil VS2, voisine de la tension de régulation de la charge de la batterie, cette valeur indiquant le niveau de l'amplitude de la tension de phase alternateur pour la détection d'un défaut relatif à cette amplitude,

- des moyens de mémorisation et de commande de l'excitation de l'inducteur de l'alternateur, lesdits moyens de mémorisation recevant ledit deuxième signal de détection DSD et délivrant un signal SAEP d'autorisation de mise à l'état plein champ au cours de l'amorçage de l'alternateur, et un signal de commande de rerégulation de la tension de phase alternateur (SCR) lors d'un délestage de charge sur le réseau alimenté par l'alternateur,

- des moyens logiques de commande conditionnelle de la tension d'excitation de l'inducteur In.

Le document US-A-4 584 515 décrit également un régulateur d'un type similaire.

La présente invention a pour objet la mise en oeuvre d'un régulateur présentant à la fois les caractéristiques des régulateurs monofonction et des régulateurs multifonction, les régulateurs objet de l'invention constituant ainsi des régulateurs plurifonction.

Outre la particularité remarquable précédemment citée, un objet du régulateur objet de l'invention est également de supprimer le risque d'excitation plein champ de l'inducteur de l'alternateur.

Un autre objet de la présente invention est la mise en oeuvre d'un régulateur dans lequel l'élément de signalisation ou lampe témoin est protégé dans le cas où notamment dans les pays à climat nordique ou continental une alimentation externe auxiliaire de valeur de tension très supérieure à la tension nominale de l'alternateur est appliquée au régulateur.

Un autre objet de la présente invention est la mise en oeuvre d'un régulateur permettant de réaliser automatiquement une magnétisation des circuits magnétiques de l'alternateur même en l'absence de la batterie d'accumulateurs.

Un autre objet de la présente invention est la mise en oeuvre d'un régulateur dans lequel la sensibilité aux parasites de l'entrée de tension de phase alternateur est diminuée.

Un autre objet de la présente invention est la mise en oeuvre d'un régulateur grâce auquel le risque d'excitation de l'inducteur, lorsque l'alternateur est arrêté, en raison de la polarisation du stator à un potentiel positif, est supprimé.

Un autre objet de la présente invention est la mise en oeuvre d'un régulateur dans lequel le système de filtrage de la tension de phase alternateur n'entraîne aucune augmentation de l'amplitude de la tension de phase alternateur lorsque la vitesse de rotation de ce dernier augmente lors de la rerégulation de la tension de phase.

Un autre objet de la présente invention est la mise en oeuvre d'un régulateur grâce auquel l'absence de charge de la batterie est signalée, malgré l'existence d'une tension de phase alternateur de grande amplitude créée par une forte rémanence du circuit magnétique de l'alternateur.

Un autre objet de la présente invention est la mise en oeuvre d'un régulateur dans lequel le temps de réponse de l'ensemble constitué par le régulateur et l'alternateur lors d'un fonctionnement en situation de rerégulation de tension de phase alternateur est sensiblement inversement proportionnel à la vitesse de rotation de l'alternateur, afin de tenir compte des variations importantes de l'amplitude de la tension de phase alternateur lors des rerégulations de tension de phase à vitesse de rotation alternateur élevée.

Le régulateur plurifonction de la tension d'excitation d'un alternateur de charge de batterie pour véhicule automobile, selon l'invention, comprend les caractéristiques citées en référence au document FR-A-2 555 834.

Il est remarquable en ce que ledit signal de détection PSD autorise l'établissement d'un courant d'excitation à la fréquence et au rapport cyclique imposé par le signal de tension de phase alternateur appliqué à la borne d'entrée de tension de phase alternateur, afin de déclencher le processus d'amorçage de l'alternateur, et en ce que le régulateur comprend en outre des moyens de cadencement des moyens de mémorisation et de commande de l'excitation de l'inducteur en synchronisme de la vitesse de rotation alternateur, lesdits moyens de cadencement recevant ledit premier signal de détection PSD et un signal d'horloge de référence à fréquence fixe CK, lesdits moyens délivrant un signal de cadencement SCS synchrone de la vitesse de rotation de l'alternateur lorsque celui-ci est en rotation et un signal de cadencement à fréquence fixe lorsque l'alternateur est immobile.

Le régulateur plurifonction objet de l'invention est particulièrement adapté à une utilisation pour les circuits électriques de recharge de batteries de véhicules automobiles poids lourds ou véhicules personnels.

L'invention sera mieux comprise à la lecture de la description et à l'observation des dessins ci-après dans lesquels, outre les figures relatives à l'art antérieur,

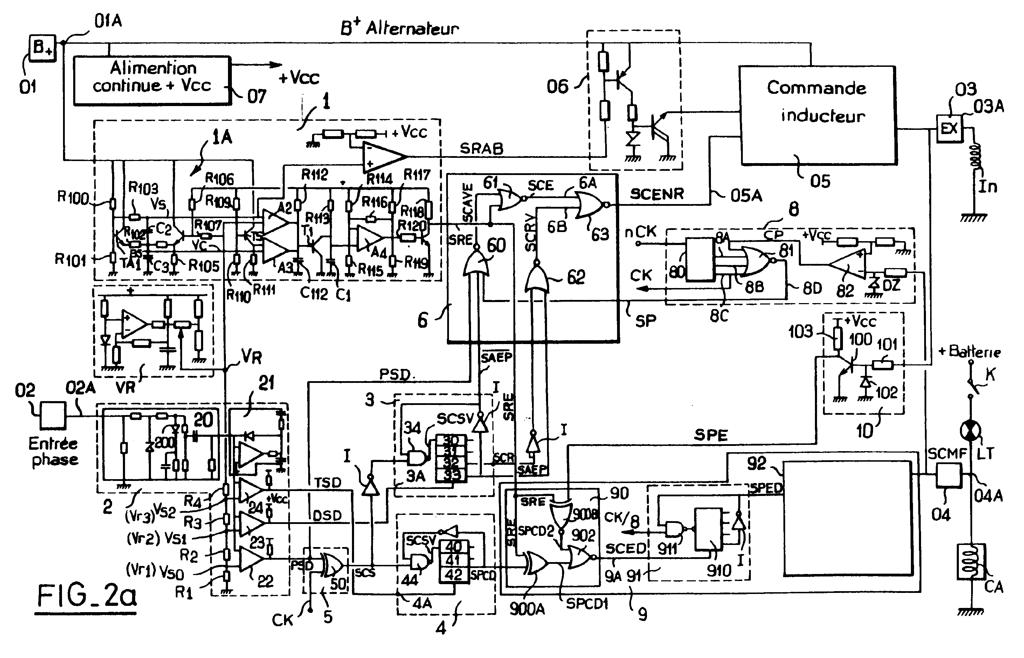

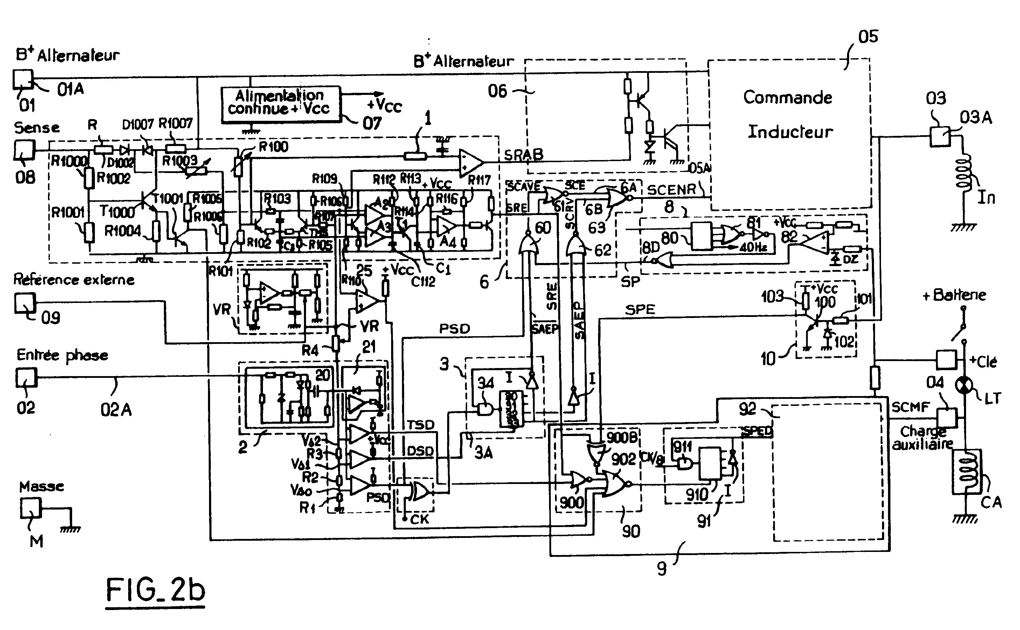

. les figures 2a et 2b représentent un schéma général de réalisation du régulateur objet de l'invention,

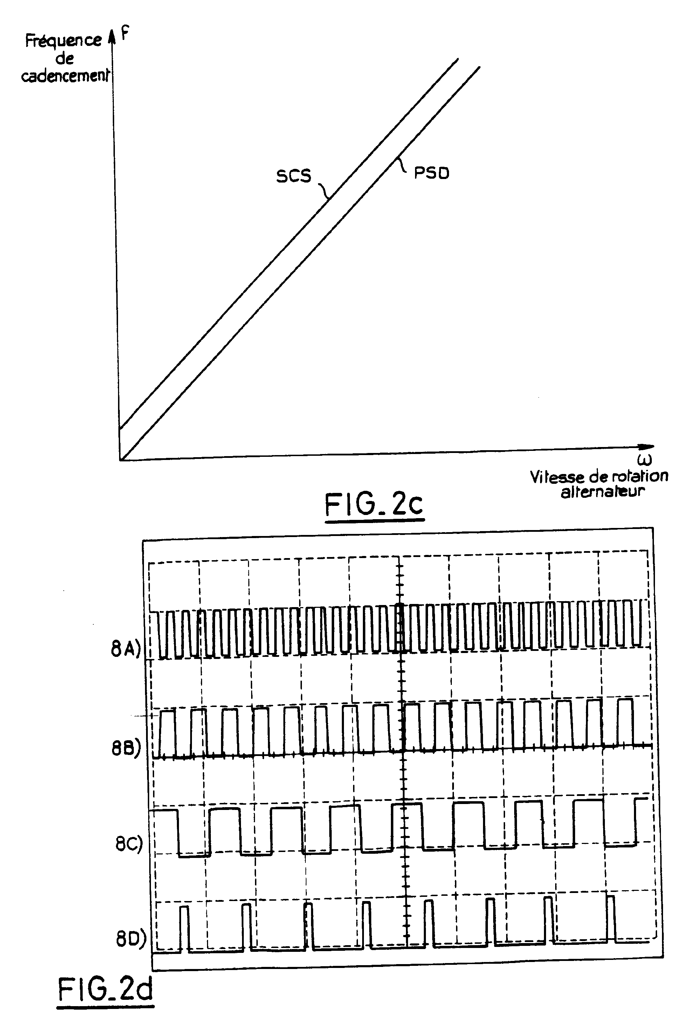

. la figure 2c représente une courbe caractéristique fréquence-vitesse de rotation alternateur relative aux moyens de cadencement synchrone de l'alternateur,

. la figure 2d représente différents chronogrammes de signaux relevés en des points de tests remarquables de la figure 2a d'un circuit de préexcitation inclus dans le régulateur objet de l'invention,

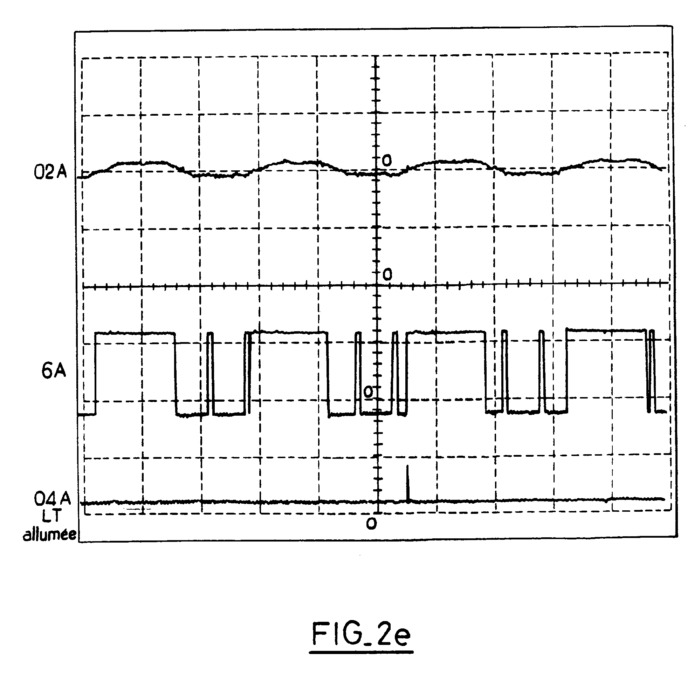

. la figure 2e représente différents chronogrammes de signaux relevés en des points de tests remarquables de la figure 2a ou 2b au cours de la mise en fonctionnement du régulateur selon l'invention,

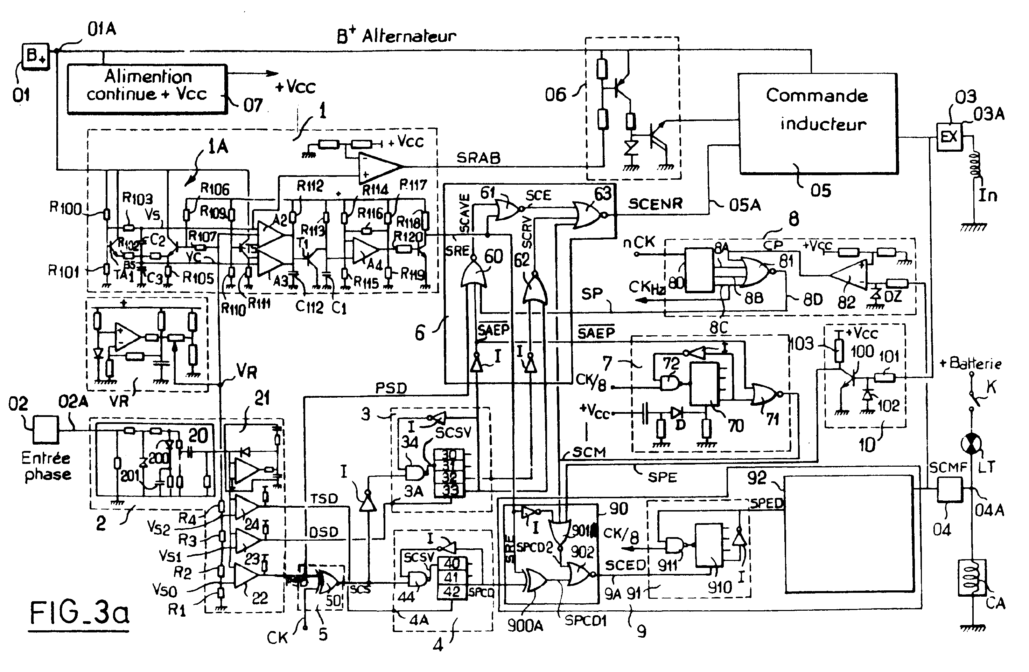

. la figure 3a représente une variante de réalisation non limitative d'un régulateur selon l'invention dans lequel, en outre, un circuit de magnétisation est prévu, afin d'assurer une magnétisation des circuits magnétiques de l'alternateur même en l'absence de la batterie d'accumulateurs,

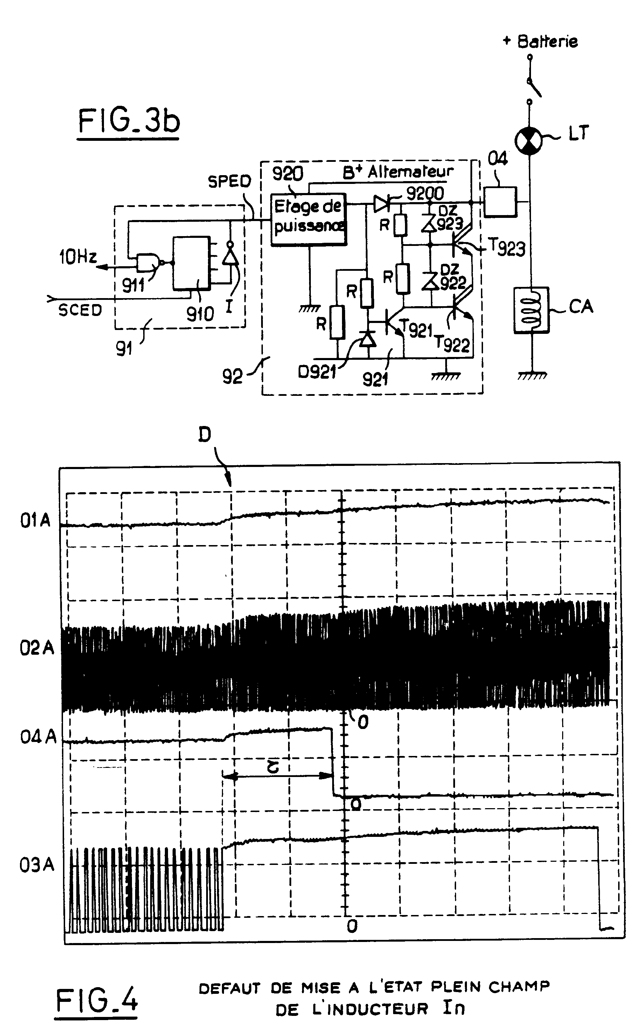

. la figure 3b représente à titre d'exemple non limitatif un mode de réalisation pratique du circuit de commutation émettant la commande de la lampe témoin LT lors de l'existence de défauts,

. la figure 4 représente différents chronogrammes de signaux relevés en des points de tests remarquables d'un régulateur selon l'invention lors de l'existence d'un défaut tel que l'alimentation plein champ de l'inducteur de l'alternateur,

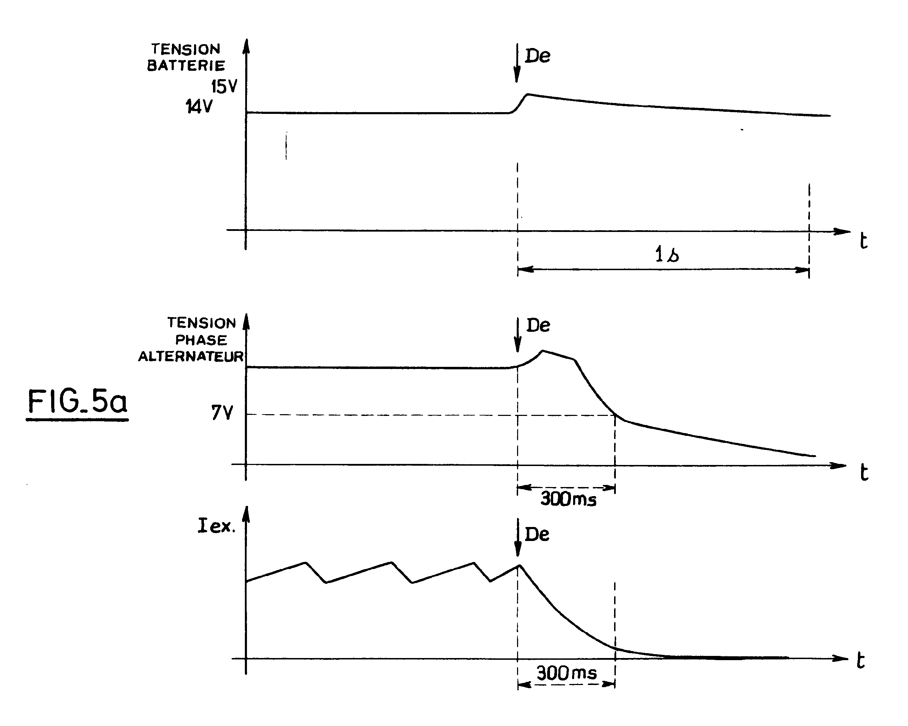

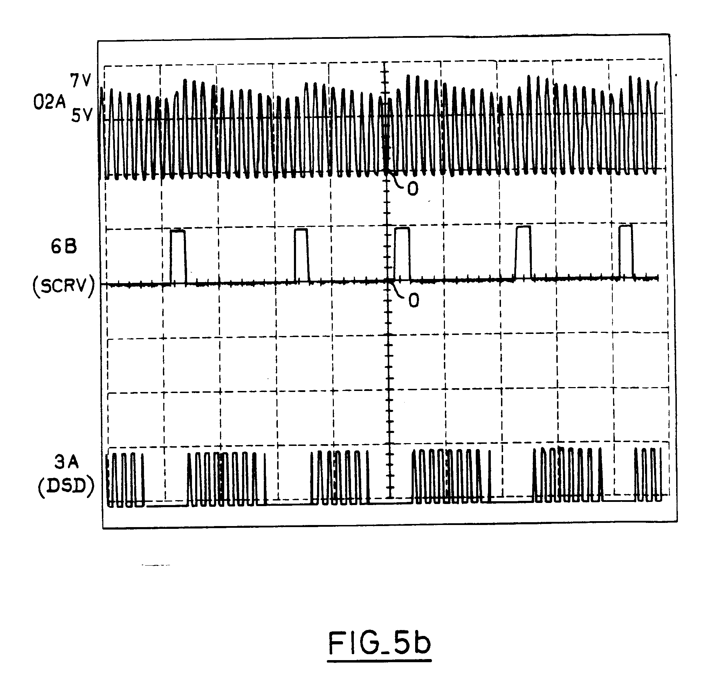

. les figures 5a et 5b représentent différents chronogrammes de signaux relevés en des points de tests remarquables du régulateur objet de l'invention, dans le cas où suite à un délestage important de la charge du réseau alimenté par l'alternateur une rerégulation de la tension de phase alternateur est effectuée,

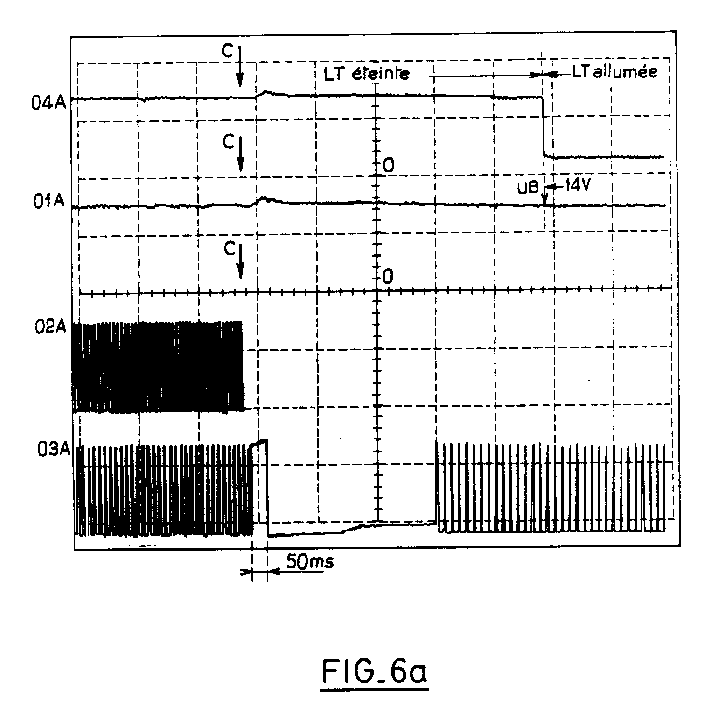

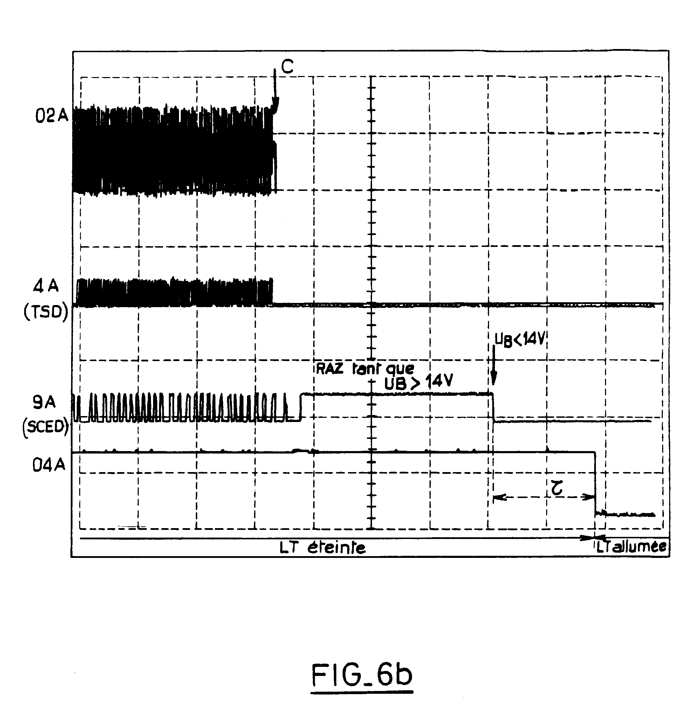

. les figures 6a et 6b représentent différents chronogrammes de signaux relevés en des points de tests remarquables d'un régulateur selon l'invention lors de l'existence d'un défaut tel qu'une coupure entre l'alternateur et la borne d'entrée 02 de la tension de phase alternateur,

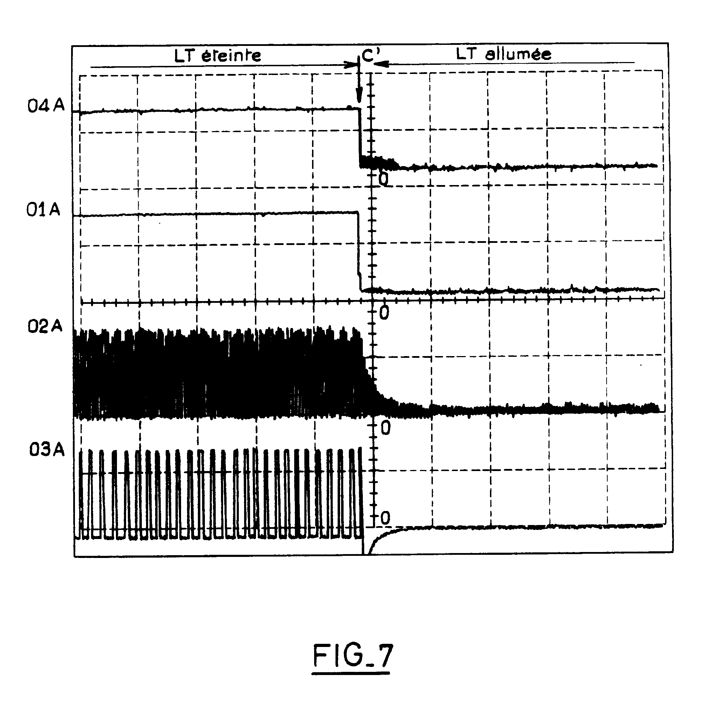

. la figure 7 représente différents chronogrammes de signaux relevés en des points de tests remarquables d'un régulateur selon l'invention lors de l'existence d'un défaut tel qu'une coupure entre la borne de sortie alternateur redressée positive, borne B+ et la borne d'entrée 01 du régulateur objet de l'invention,

Le régulateur plurifonction de la tension d'excitation d'un alternateur de charge de batterie pour véhicule automobile objet de l'invention sera tout d'abord décrit en liaison avec la figure 2a.

Sur la figure 2a précitée et sur l'ensemble des dessins, les références commençant par le chiffre 0 sont relatives à des éléments du régulateur déjà largement connus de l'état de la technique. En règle générale, ces éléments ne seront pas décrits en détail car ils sont normalement connus de l'homme de métier.

Selon la figure 2a précitée, le régulateur objet de l'invention comporte au moins une borne 01 d'entrée de tension de batterie, cette borne étant normalement connectée à la borne B+ délivrant la tension redressée alternateur, cette borne étant habituellement connue dans le domaine technique correspondant sous le nom de borne "sense".

Le régulateur comporte en outre une borne 02 d'entrée de tension de phase alternateur, une borne 03 de sortie de régulation d'excitation de l'alternateur et une borne 04 de connexion d'une lampe témoin LT normalement connectée en série avec la clef de contact K du véhicule automobile.

Dans une réalisation du régulateur objet de l'invention sous forme de circuit intégré monolithique, les bornes 01, 02, 03, 04 ainsi que la borne de masse non représentée sur la figure 2a, délimitent ainsi l'étendue de ce circuit intégré sur le substrat unique considéré.

Ainsi qu'on l'a représenté, en outre, sur la figure 2a, le régulateur objet de l'invention comporte un circuit 05 de commande d'excitation de puissance de l'inducteur In de l'alternateur. Ce circuit de commande d'excitation 05 est normalement relié à l'inducteur In par l'intermédiaire de la borne 03 précitée. Le circuit 05 est mis en oeuvre de manière classique au moyen de transistors de puissance et, en tant que tel, ne sera pas décrit en détail. En outre, la commande de régulation du courant d'excitation dans l'inducteur In est effectuée à partir de ce circuit de commande inducteur de puissance 05 précité par l'intermédiaire d'un circuit de protection de pont redresseur 06. Ce circuit de protection de pont redresseur 06 est également constitué par un circuit de type classique, lequel permet d'assurer une protection des diodes Zéner du pont redresseur de la tension délivrée par l'alternateur. Ce circuit ne sera pas non plus décrit en détail car il est parfaitement connu de l'état de la technique.

Conformément à un aspect plus particulier du régulateur plurifonction, objet de l'invention, celui-ci comprend, ainsi que représenté en figure 2a, un circuit 1 de détection du niveau de tension de batterie connecté à la borne 01 d'entrée de tension batterie. Le circuit 1 délivre, d'une part, un signal SRAB de rupture de la liaison alternateur-batterie au circuit 06 de protection des diodes Zéner du pont redresseur alternateur, ainsi qu'il sera décrit ultérieurement dans la description, notamment en cas de déconnexion et rupture de la liaison alternateur batterie, ainsi que précédemment mentionné.

Le circuit 1 délivre, d'autre part, un signal de régulation d'excitation SRE sur la valeur crête et la valeur moyenne de la tension batterie. Ce signal de régulation d'excitation SRE permet, ainsi qu'il sera décrit ultérieurement dans la description, d'assurer la mise à l'état plein champ de l'inducteur In de l'alternateur après amorçage de celui-ci.

Le régulateur plurifonction de la tension d'excitation d'un alternateur de charge de batterie objet de l'invention comprend en outre un circuit 2 de détection de l'amplitude de la tension de phase alternateur connecté à la borne d'entrée 02 de phase alternateur. Ce circuit 2 de détection permet d'engendrer un premier signal de détection PSD par rapport à une première valeur de seuil VS0 correspondant à la mise en forme non mémorisée du signal de tension de phase alternateur disponible pour de très faibles vitesses de rotation de l'alternateur. Ce signal de détection PSD autorise l'établissement d'un courant d'excitation à la fréquence et au rapport cyclique imposé par le signal de tension de phase alternateur appliqué à la borne 02 d'entrée de tension de phase alternateur, afin de déclencher le processus d'amorçage de l'alternateur. Par vitesse de rotation très faible de l'alternateur, on entend les vitesses de rotation lors du démarrage du moteur du véhicule par exemple, ces vitesses étant, de manière générale, inférieures à 1000 tours/minute. La première valeur de seuil VS0 peut alors, à titre d'exemple non limitatif, être prise égale à 0,7 Volt par exemple de façon à détecter la présence du signal de tension de phase alternateur dès les très faibles vitesses de celui-ci, c'est-à-dire en début de démarrage.

En outre, le circuit 2 de détection d'amplitude de la tension de phase alternateur permet d'engendrer un deuxième signal de détection DSD par rapport à une deuxième valeur de seuil VS1 dite intermédiaire. Le deuxième signal de détection DSD autorise la mise à l'état plein champ de l'alternateur pendant le processus d'amorçage déclenché par le premier signal de détection PSD. La valeur de seuil VS1 est qualifiée d'intermédiaire car elle est de préférence comprise entre la valeur du premier seuil VS0 et la tension nominale de la batterie par exemple.

Le circuit 2 de détection permet également d'engendrer un troisième signal de détection TSD par rapport à une troisième valeur de seuil VS2. De préférence, cette valeur de seuil est voisine de la tension de régulation de la charge de la batterie et indique le niveau de l'amplitude de la tension de phase alternateur pour la détection d'un défaut relatif à cette amplitude, ainsi qu'il sera décrit en détail ultérieurement dans la description.

Ainsi qu'on l'a représenté, en outre, en figure 2a, le régulateur plurifonction objet de l'invention comporte également des moyens 3 de mémorisation et de commande de l'excitation de l'inducteur de l'alternateur. Ces moyens de mémorisation 3 reçoivent le deuxième signal de détection DSD et délivrent un signal SAEP d'autorisation de mise à l'état plein champ de l'inducteur In de l'alternateur au cours de l'amorçage de l'alternateur, ainsi qu'un signal de commande de rerégulation de la tension de phase alternateur, signal SCR, lors d'un délestage de charge sur le réseau alimenté par l'alternateur.

Ainsi qu'on l'a également représenté en figure 2a, le régulateur plurifonction objet de l'invention peut comporter des moyens 4 de mémorisation du niveau d'amplitude de la tension de phase alternateur. Ces moyens 4 de mémorisation reçoivent le troisième signal de détection TSD et délivrent un signal mémorisé SPCD du niveau de l'amplitude de la tension phase alternateur pour la détection d'un défaut relatif à cette amplitude.

Le régulateur plurifonction objet de l'invention comporte également des moyens 5 de cadencement, des moyens 3 de mémorisation et de commande de l'excitation de l'inducteur, ainsi que des moyens 4 de mémorisation du niveau d'amplitude de la tension phase alternateur. Ce cadencement est assuré en synchronisme de la vitesse de rotation alternateur pour les régimes de rotation élevés de celui-ci, ainsi qu'il sera décrit ci-après.

Les moyens 5 de cadencement précités reçoivent le premier signal de détection PSD, c'est-à-dire le signal de la tension phase alternateur dont l'amplitude est supérieure à la première valeur de seuil VS0, soit dans l'exemple considéré 0,7 Volt et un signal d'horloge de référence à fréquence fixe CK. A titre d'exemple non limitatif, la fréquence du signal d'horloge à fréquence fixe CK peut être prise égale à 80 Hz par exemple. Les moyens 5 de cadencement synchrone délivrent un signal de cadencement SCS, synchrone de la vitesse de rotation de l'alternateur lorsque celui-ci est en rotation et un signal de cadencement à fréquence sensiblement fixe égale à la fréquence du signal d'horloge CK lorsque l'alternateur est immobile.

Enfin, le régulateur plurifonction objet de l'invention comprend des moyens logiques 6 de commande permettant d'assurer une commande conditionnelle de la tension d'excitation de l'inducteur In.

Sur la figure 2a, on a représenté en outre un circuit 8 de commande de préexcitation. Ce circuit de commande de préexcitation comporte essentiellement un comparateur à seuil 82 recevant sur sa borne négative une tension fixe engendrée par la diode Zéner de polarisation DZ polarisée par l'intermédiaire de la borne 04 de connexion de la lampe témoin LT sur fermeture de la clef de contact K du véhicule automobile. Le comparateur 82 reçoit sur sa borne positive une tension fixe engendrée par la tension d'alimentation +VCC délivrée par une alimentation continue +VCC 07 de type classique et délivre sur fermeture de la clef de contact K un signal de commande de préexcitation CP. Le circuit 8 de commande de préexcitation comporte en outre un ensemble de bascules bistables 80 recevant sur une première entrée un signal d'horloge à fréquence fixe de fréquence nCK où n est de préférence pris égal à 8. Une porte NON-OU 81 reçoit, d'une part, sur une première entrée le signal de commande de préexcitation CP et, sur trois entrées successives, une sortie des trois bascules constituant l'ensemble de bascules bistables 80, le signal d'horloge de fréquence CK étant entré sur la dernière entrée de la porte NON-OU 81. Cette porte NON-OU 81 délivre en sortie un signal de préexcitation SP, lequel permet d'assurer la commande en régime de préexcitation de l'inducteur In de l'alternateur, ainsi qu'il sera décrit ci-après.

Le circuit de commande de préexcitation 8 reçoit de la borne 04 de connexion de lampe témoin LT un signal de commande de mise en fonctionnement SCMF engendré par le basculement de la clef de contact K du véhicule lors de l'utilisation. Le signal SP, délivré suite au basculement de la clef de contact K, est alors un signal périodique de rapport cyclique 1/8 correspondant au régime de préexcitation de l'inducteur de l'alternateur. De préférence, le signal d'horloge CK ayant une fréquence de 80 Hz, le signal nCK aura une fréquence de 640 Hz.

Une description plus détaillée des moyens logiques 6 de commande conditionnelle sera donnée en liaison avec la figure 2a.

Sur la figure précitée, les moyens logiques 6 de commande conditionnelle comportent au moins une porte NON-OU 60 recevant sur ses entrées les conditions de validation d'excitation de l'inducteur In de l'alternateur, ces conditions de validation étant formées respectivement par le signal de préexcitation SP délivré par le circuit 8 de préexcitation dès fermeture de la clef de contact K, le premier signal de détection PSD de l'amplitude de la tension phase alternateur apparaissant pour les très faibles vitesses de rotation de l'alternateur, le signal complémenté SAEP d'autorisation de mise à l'état plein champ apparaissant à l'instant d'amorçage de l'alternateur. Ce signal ne disparaît normalement qu'à l'arrêt de la rotation alternateur. La première porte NON-OU 60 délivre en sortie un signal SCAVE dit signal de commande de validation d'excitation.

Les moyens logiques de commande conditionnelle 6 comportent en outre une deuxième porte NON-OU 61 recevant respectivement sur ses entrées le signal SRE de régulation d'excitation sur la valeur crête et la valeur moyenne de la tension batterie et le signal SCAVE de commande de validation d'excitation délivré par la première porte NON-OU 60 précédemment décrite. La deuxième porte NON-OU 61 délivre en sortie un signal conditionnel d'excitation SCE, lequel est fonction de la tension mesurée sur la batterie ou en sortie de l'alternateur et correspond au signal SRE de régulation d'excitation complémenté lorsque le signal de commande de validation d'excitation SCAVE est à un niveau bas.

Ainsi qu'on l'a, en outre, représenté en figure 2a, les moyens 6 logiques de commande conditionnelle comportent également une troisième porte NON-OU 62. Cette porte reçoit sur ses entrées respectivement, d'une part, le signal complémenté $\overline{SCR}$ délivré par les moyens 3 de mémorisation et de commande de l'excitation de l'inducteur de l'alternateur par l'intermédiaire d'un inverseur I. La porte NON-OU 62 reçoit, d'autre part, le signal SAEP d'autorisation de mise à l'état plein champ de l'inducteur In de l'alternateur, ce signal SAEP étant également délivré par les moyens 3 de mémorisation et de commande de l'excitation de l'inducteur de l'alternateur. La troisième porte NON-OU 62 délivre en sortie un signal SCRV dit signal de commande de rerégulation de tension de phase alternateur validé. Ce signal de commande de rerégulation SCRV de la tension de phase alternateur est limité dans le temps par un changement de niveau du signal d'autorisation de mise à l'état plein champ SAEP interdisant ainsi la poursuite de la rerégulation de tension de phase alternateur en cas de défaut sur le circuit 2 de détection de l'amplitude de la tension de phase alternateur ou de déconnexion de la borne d'entrée de phase 02, ainsi qu'il sera décrit ultérieurement dans la description.

Les moyens logiques de commande conditionnelle 6 comportent enfin une quatrième porte NON-OU 63 recevant au moins sur ses entrées le signal SCE conditionnel d'excitation délivré par la porte NON-OU 61 et le signal SCRV de commande conditionnelle de rerégulation de tension de phase validé. La quatrième porte NON-OU 63 délivre un signal SCENR de commande d'excitation normal résultant au circuit 05 de commande d'excitation de puissance de l'inducteur In.

Outre les éléments précédemment cités, le régulateur plurifonction comporte également des moyens 9 de signalisation de défaut alternateur. Ces moyens 9 ont pour objet d'assurer, sur présence d'une pluralité de défauts, l'allumage de la lampe témoin LT pour signaler ces défauts à l'utilisateur du véhicule, le régulateur justifiant ainsi son qualificatif de régulateur plurifonction.

En outre, afin d'assurer une commande complète de la signalisation de défauts, ainsi qu'on l'a représenté en figure 2a, le régulateur plurifonction comporte un circuit 10 de détection d'excitation délivrant un signal SPE de présence ou d'absence d'excitation de l'alternateur.

Ainsi que représenté en figure 2a, le circuit 10 de détection d'excitation peut comporter un circuit de commutation constitué par un transistor 100, monté en émetteur commun, dont l'électrode de collecteur est reliée par une résistance 103 à la tension d'alimentation +VCC du dispositif et, dont l'électrode de base est reliée, par l'intermédiaire d'une résistance 101 et d'une diode 102 montée en parallèle sur la borne commune à la résistance 101 et à l'électrode de base du transistor 100, à la borne 03 de sortie de régulation d'excitation de l'alternateur. En présence d'une tension d'excitation de l'inducteur In de l'alternateur, le circuit de commutation, constitué par le transistor 100 et les éléments de polarisation précités, permet d'assurer la conduction du transistor précité et l'existence d'un signal SPE de niveau bas représentatif de l'existence de l'excitation. En l'absence de tension d'excitation, le transistor 100 est bloqué et le signal SPE est à un niveau haut représentatif de l'absence du signal d'excitation de l'inducteur de l'alternateur.

Ainsi qu'on l'a, en outre, représenté en figure 2a, les moyens 9 de signalisation de défaut alternateur peuvent comprendre avantageusement un circuit logique 90 de commande de visualisation de défaut alternateur permettant d'engendrer un signal de commande d'existence conditionnelle de défaut de charge de batterie SCED à partir du signal de régulation d'excitation SRE sur la valeur moyenne et la valeur crête de la tension batterie, du signal mémorisé du niveau d'amplitude de la tension de phase alternateur SPCD délivré par les moyens 4 de mémorisation du niveau d'amplitude de la tension de phase alternateur et du signal SPE délivré par le circuit 10 de détection d'excitation. En outre, les moyens de signalisation de défaut 9 précités comportent également un circuit de temporisation 91 recevant le signal de commande d'existence conditionnelle de défaut alternateur SCED délivré par le circuit logique de commande de visualisation et délivrant un signal de présence effective de défaut alternateur SPED.

Un circuit de commutation 92 reçoit le signal de présence effective de défaut alternateur SPED précité et permet l'alimentation ou la non alimentation de la borne 04 pour l'extinction ou l'allumage de la lampe témoin LT indicatrice de défaut alternateur.

Une description plus détaillée du circuit logique de commande de visualisation de défaut 90 sera donnée en liaison avec la figure 2a.

Le circuit logique de commande de visualisation de défaut 90 précité permet sur maintien de signal de commande d'existence conditionnelle de défaut SCED pendant une durée supérieure à la durée de temporisation, la commande de visualisation de défaut par allumage de la lampe témoin LT en fonction des valeurs de tension de batterie et des valeurs de signal de présence ou absence d'excitation SPE de l'inducteur selon la relation ci-après :

| SPE / UB | $UB < Un$ | $UB > Un$ |
|---|---|---|
| $\overline{Ex}$ | $LT = 1$ | $LT = 0$ |
| $Ex$ | $LT = 0$ | $LT = 1$ |

Dans la relation logique précitée, Ex représente la présence d'un courant d'excitation et $\overline{Ex}$ l'absence d'un courant d'excitation de l'inducteur In de l'alternateur, Un représente la tension nominale de la batterie, UB représente la tension effective de la batterie. Les valeurs 1 indiquent la présence de défaut de charge batterie, la lampe témoin LT étant allumée, et les valeurs 0 représentent l'absence de défaut la lampe témoin LT étant alors éteinte. Afin de réaliser la relation logique précitée, le circuit logique de commande de visualisation de défaut 90 comporte avantageusement, ainsi que représenté en figure 2a, une porte logique 900B de type OU exclusif recevant sur une première entrée le signal SRE de régulation d'excitation sur la valeur crête et la valeur moyenne de la tension batterie et sur une deuxième entrée le signal SPE de présence ou d'absence d'excitation de l'inducteur In de l'alternateur. La porte OU exclusif 900B délivre un premier signal de présence conditionnelle de défaut SPCD2.

Le circuit logique de commande de visualisation de défaut 90 permet alors, sur maintien du signal de commande d'existence conditionnelle de défaut SCED pendant une durée supérieure à la durée de temporisation, la commande de visualisation de défaut par allumage de la lampe témoin LT en fonction des valeurs de tension de batterie et de tension de phase alternateur selon la relation logique ci-après :

7

| UB    Up | UB    <    Un | UB    >    Un |
|---|---|---|
| Up    <    Vs2 | LT = 1 | LT = 0 |
| Up    >    Vs2 | LT = 0 | LT = 1 |

Dans la relation précitée, Vs2 représente la valeur de tension de seuil de comparaison du circuit de détection de l'amplitude de la tension de phase alternateur, Un représente la tension nominale de la batterie, UB représente la tension effective de la batterie et Up la tension de phase alternateur. Les valeurs 1 indiquent la présence de défaut de charge de batterie, la lampe témoin LT étant allumée et les valeurs 0 représentent l'absence de défaut, la lampe témoin LT étant alors éteinte.

Afin d'assurer la relation logique précitée, le circuit logique de commande de visualisation de défaut 90 comporte avantageusement, ainsi que représenté en figure 2a, une porte logique 900A de type OU exclusif recevant sur une première entrée le signal SRE de régulation d'excitation sur la valeur crête et la valeur moyenne de la tension de batterie et sur une deuxième entrée le signal SPCD mémorisé du niveau de l'amplitude de la tension de phase alternateur. La porte OU exclusif 900A délivre un signal de présence conditionnelle de défaut SPCD1.

Le circuit logique de commande de visualisation de défaut 90 comporte enfin une porte logique 902 de type NON-OU recevant respectivement sur deux entrées les deux signaux de présence conditionnelle de défaut SPCD1 et SPCD2 délivrés respectivement par les portes OU exclusif 900A et 900B. La porte logique 902 de type NON-OU délivre le signal résultant d'existence conditionnelle de défaut de charge de batterie SCED précédemment cité.

Sur la figure 2a, on a représenté les moyens 5 de cadencement des moyens de mémorisation et de commande de l'excitation de l'inducteur et des moyens de mémorisation de niveau d'amplitude de la tension de phase alternateur en synchronisme de la vitesse de rotation de l'alternateur. Ces moyens 5 comprennent, à titre d'exemple non limitatif, une porte logique 50 de type OU exclusif recevant sur une première entrée un signal d'horloge de référence à fréquence fixe CK et sur une deuxième entrée le premier signal de détection PSD correspondant à la mise en forme non mémorisée du signal phase alternateur aux très faibles vitesses de rotation de l'alternateur. La porte logique 50 délivre un signal de cadencement SCS, synchrone de la vitesse de rotation alternateur au moyen 3 de mémorisation et de commande de l'excitation plein champ de l'inducteur de l'alternateur et au moyen 4 de mémorisation du niveau d'amplitude de la tension de phase alternateur.

Sur la figure 2b, on a représenté une variante simplifiée du régulateur objet de l'invention, tel que représenté en figure 2a, dans lequel les moyens 4 de mémorisation du niveau d'amplitude sont supprimés. Dans ce cas, la porte OU exclusif 900A de la figure 2a est remplacée par une porte NON-OU 900 recevant directement le troisième signal de détection TSD et le signal SRE, signal de régulation d'excitation sur la valeur crête, délivré par le circuit 1. La sortie de la porte NON-OU 900 est alors reliée à une entrée de la porte NON-OU 902.

En outre, un circuit d'interface constitué par deux transistors en cascade T 1000, T 1001 recevant le signal de la borne "sense" 08 par l'intermédiaire d'un pont diviseur R 1000, R 1001 permet d'intégrer la fonction sense au régulateur. La tension délivrée par le collecteur du transistor T 1001 chargé par une résistance R 1005 reliée à l'alimentation +Vcc est alors directement appliquée à une entrée de la porte NON-OU 902. La résistance ajustable R 1003, R 1006 permet d'ajuster la tension appliquée à la borne négative de l'amplificateur A2, dont l'agencement sera décrit ultérieurement dans la description.

La tension batterie B+ borne 01 est alors reliée au régulateur, selon le mode de réalisation de la figure 2b, par l'intermédiaire du circuit d'interface précité.

L'interface joue le rôle d'un circuit de transmission conditionnelle de la tension délivrée par la borne 08 "sense". Celle-ci peut, ainsi que représenté en Fig. 2b, être séparée de la borne 01, B+ alternateur, et être directement reliée à la borne positive de la batterie, ce qui permet d'assurer une régulation plus précise sur la valeur effective de la tension de batterie.

Dans le cas où la liaison de la borne 08 "sense" à la batterie est interrompue accidentellement, la borne 08 est mise à la tension de masse du dispositif par l'intermédiaire des résistances R 1000, R 1001. Le transistor T 1000 se bloque, ce qui a pour effet, la diode D 1002 étant bloquée, d'appliquer la tension B+ alternateur de la borne 01 par la diode D 1007 et les résistances R 1003 ajustable et R 1006 au circuit de filtrage R 103, C2, C3, la tension B+ jouant le rôle de tension de "sense". Le traitement ultérieur de ce signal sera décrit ultérieurement dans la description, ce traitement, par les moyens 1 de traitement de régulation sur la valeur crête étant le même que le signal présent sur R 1006 sur lequel est effectuée la régulation, soit délivré par la borne 08 "sense" ou par la borne 01 B+ alternateur. Suite au blocage du transistor T 1000, le transistor T 1001 se bloque à son tour et la tension de collecteur de celui-ci est transmise à la porte NON-OU 902 pour signaler le défaut de disposition de la tension "sense" sur la borne 08.

Un comparateur 25 dont la borne négative est reliée à la borne commune des résistances R 1003 et R 1006 et dont la borne positive est reliée à la borne à la tension de référence VR du régulateur elle-même reliée à une borne de référence externe 09 est en outre prévu. La sortie du comparateur 25 est connectée à une entrée de la porte NON-OU 902.

La borne référence externe 09 est reliée à une tension de référence externe inférieure à la valeur nominale Un de la tension de batterie, cette valeur de référence externe pouvant avoir une valeur comprise entre 10 V et 11 V par exemple. Dans le cas où la liaison de la batterie à la sortie B+ alternateur, liaison assurant la charge de la batterie par l'alternateur, est coupée de manière accidentelle, la charge de la batterie n'est plus assurée. Le courant d'excitation de l'inducteur In de l'alternateur augmente ainsi que la tension de phase alternateur Up, sans que la batterie soit rechargée, et la tension sense délivrée par la borne 08 diminue. Cette tension est délivrée à la borne négative du comparateur 25, lequel déclenche lorsque la tension précitée devient inférieure à la tension de référence externe délivrée par la borne 09 après réglage par la résistance R4. La tension délivrée par le comparateur 25, suite au déclenchement précité à la porte NON-OU 902, permet de signaler le défaut dû à l'absence de charge de batterie.

Sur la figure 2c, on a représenté la variation de la fréquence du signal SCS en fonction de la vitesse angulaire en rotation de l'alternateur. On comprendra, bien entendu, que la fréquence du signal SCS est sensiblement constante et égale à la fréquence du signal d'horloge CK, donc égale à 80 Hz par exemple pour des vitesses de rotation de l'alternateur inférieures ou égales à 100 tours/minute, la fréquence du signal SCS étant ensuite sensiblement proportionnelle à la vitesse de rotation de l'alternateur.

Ainsi qu'on l'a, en outre, représenté en figure 2a et 2b, les moyens 3 de mémorisation et de commande de l'excitation de l'inducteur de l'alternateur et les moyens 4 de mémorisation du niveau d'amplitude de la tension de phase alternateur comportent respectivement une série de quatre et trois bascules bistables 30 à 33, respectivement 40 à 42. Ces bascules sont des bascules de type JK connectées en cascade, les entrées de remise à zéro de chaque série de bascules recevant respectivement le deuxième DSD et le troisième TSD signal de détection. Les moyens de mémorisation 3 et 4 précités comportent en outre une porte logique de type NON-ET 34, 44 recevant sur une première entrée le signal de cadencement SCS, synchrone de la vitesse de rotation alternateur et sur une deuxième entrée, le signal de basculement délivré par la sortie de la quatrième 33 respectivement troisième 42 bascule de la série correspondante par l'intermédiaire d'un inverseur I. La porte de type NON-ET 34, 44 délivre en sa sortie à l'entrée de cadencement des bascules de la série correspondante le signal de cadencement synchrone validé SCSV. Lors de l'apparition du deuxième signal de détection DSD respectivement du troisième signal de détection TSD, ces derniers assurent la remise à zéro de l'ensemble des bascules précitées, et le maintien au niveau zéro des signaux SAEP respectivement SPCD. En l'absence ou lors de la disparition du deuxième signal de détection DSD respectivement du troisième signal de détection TSD, le signal de cadencement SCS assure le changement d'état des bascules 30 à 33 respectivement 40 à 42 jusqu'au passage à l'état 1 des sorties des bascules 33 respectivement 42, cet état 1 étant traduit par un niveau O par les inverseurs I sur les deuxièmes entrées des portes NON-ET 34 respectivement 44. Dans ce cas, le signal SCS n'est plus transmis par les portes NON-ET 34 et 44 et les signaux SAEP respectivement SPCD restent à leur niveau 1 tant que les signaux DSD, respectivement TSD sont absents.

Une description plus détaillée du circuit 2 de détection de l'amplitude de tension de phase alternateur sera donnée en liaison avec la figure 2a. Selon la figure précitée, le circuit 2 de détection de l'amplitude de tension de phase alternateur comprend un circuit 20 de filtrage à résistance à capacité comprenant une diode d'écrêtage 200 et délivrant, à partir de la borne 02 d'entrée de tension de phase alternateur, un signal de tension de phase alternateur filtré. La diode 200 écrête les surtensions parasites sur une capacité 201 conservant en mémoire la valeur maximale de l'amplitude de la tension de phase alternateur.

Le circuit 2 de détection d'amplitude de tension de phase alternateur comprend également un circuit d'alignement 21 recevant le signal de tension de phase alternateur filtré et délivrant un signal de tension de phase alternateur filtré dont les crêtes négatives sont alignées sur le potentiel de masse du dispositif.

En outre, un premier comparateur de tension 22 est prévu, recevant sur une première entrée positive une première tension de référence Vr1 et sur une deuxième entrée négative le signal de tension de phase alternateur filtré aligné. Le premier comparateur 22 délivrant en sa borne de sortie le premier signal de détection PSD.

Un deuxième comparateur de tension 23 est prévu et reçoit sur une première entrée négative une deuxième tension de référence Vr2 et sur une deuxième entrée positive le signal de tension de phase alternateur filtré aligné. Ce deuxième comparateur 23 délivre en sa borne de sortie le deuxième signal de détection DSD.

Un troisième comparateur de tension 24 reçoit sur une première entrée négative une troisième tension de référence Vr3 et sur une deuxième entrée positive le signal de tension de phase alternateur filtré aligné. Ce troisième comparateur 24 délivre la troisième tension de détection TSD.

Bien entendu, on comprendra que les tensions de référence Vr1, Vr2, Vr3 correspondent respectivement aux tensions de seuil Vs0, Vs1, Vs2 précitées.

Ainsi qu'on l'a représenté en figure 2a, les tensions de référence Vr1, Vr2, Vr3 peuvent être engendrées à partir d'un générateur de tension de référence VR stabilisé en température et d'un diviseur potentiométrique R1 à R4 alimenté par le générateur de tension de référence VR.

De préférence, la deuxième tension de référence Vr2 est supérieure à la valeur de crête après filtrage des surtensions parasites appliquées sur la deuxième entrée du deuxième comparateur 23 lorsque l'alternateur ne tourne pas ou que la borne d'entrée phase alternateur 02 est déconnectée de l'alternateur afin de discriminer ces surtensions parasites du signal phase alternateur.

En outre, la troisième tension de référence Vr3 est supérieure à la valeur de crête de la tension de phase alternateur appliquée à la deuxième entrée du troisième comparateur 24 lorsque cette tension de phase alternateur est obtenue en l'absence de courant d'excitation par la seule rémanence du circuit magnétique lorsque la vitesse de rotation de l'alternateur est maximale.

Ainsi, de façon non limitative, la tension de seuil Vso peut être prise égale à 0,7 Volt, la tension de seuil Vs1 peut être prise égale à 7 Volts, et la tension de seuil Vs2 peut être prise égale à une tension égale à sensiblement 12 Volts.

Ainsi qu'on l'a, en outre, représenté en figure 2a, le circuit 1 de détection du niveau de tension batterie comprend un circuit 1A de détection et de mémorisation de la valeur crête de la tension redressée appliquée à la batterie.

Le circuit 1 de détection comporte également un premier comparateur A2 recevant sur sa borne positive une valeur de seuil ou de consigne VR, cette valeur de seuil ou de consigne étant délivrée par le circuit VR précédemment décrit. Cette valeur de seuil ou de consigne VR est représentative de la tension de consigne de charge de batterie. Le premier comparateur A2 reçoit sur sa borne négative le signal alternateur filtré Vs.

Le circuit 1 de détection comporte également un circuit de décharge constitué par un transistor de commutation T1. La base de ce transistor est reliée à la sortie du premier comparateur A2. En outre un circuit de temporisation à résistance R113 et capacité C1 est prévu afin d'imposer une fréquence maximale de régulation . La capacité C1 est connectée entre le collecteur et l'émetteur du transistor T1 constituant circuit de décharge de cette capacité C1 et la résistance R113 constitue une résistance de charge de la capacité C1.

Un deuxième comparateur A4 à double seuil est prévu. La borne négative de ce comparateur est directement connectée à la borne commune de la résistance R113 et de la capacité C1 et la borne positive de celui-ci est reliée au point intermédiaire d'un pont diviseur R114, R115. La sortie du comparateur A4 est connectée en réaction sur le point intermédiaire au moyen d'une résistance R116.

Le circuit de détection 1 comporte également un troisième comparateur A3. Ce troisième comparateur reçoit sur sa borne positive une valeur de seuil représentative de la valeur de crête de tension alternateur à ne pas dépasser et sur sa borne négative le signal enveloppe de la valeur de crête Vc de la tension alternateur délivré par la borne de sortie du circuit de détection 1A. La sortie du troisième comparateur A3 est connectée à la base du transistor de commutation T1.

Sur la figure 2a, on a respectivement noté R100 à R120 l'ensemble des résistances de polarisation du circuit de détection 1. Ces résistances peuvent être déterminées par seule application des mesures et indications données par les constructeurs de composants électroniques correspondants utilisés pour la mise en oeuvre du circuit de détection 1.

En vue d'une réalisation monolithique sur un même substrat de matériau semiconducteur du régulateur plurifonction tel que représenté, en figure 2a, le circuit de mémorisation de valeur crête est constitué par un transistor TA1, une capacité C3 constituant circuit de mémorisation de l'enveloppe de valeur crête reliée, d'une part, à l'émetteur du transistor TA1 par l'intermédiaire d'une résistance R102 et, d'autre part, à la tension de référence VM du régulateur, cette tension de référence étant la tension de masse du régulateur. Un transistor TMS est prévu afin de compenser à la décharge de la capacité C3 la tension de jonction émetteur base introduite à la charge par le transistor TA1.

Pour une description plus détaillée du circuit 1 de détection du niveau de tension batterie, on pourra avantageusement se reporter à la demande de brevet français n° 88 04819 déposée en date du 12/04/88 et introduite dans la présente description à titre de référence.

Une description plus détaillée du fonctionnement du régulateur plurifonction, objet de l'invention, tel que représenté en figure 2a, sera donnée en liaison avec les figures 2d et 2e, lesquelles représentent des chronogrammes de signaux relevés à des points de test remarquables de la figure 2a.

Sur la figure 2d, on a représenté en premier lieu le chronogramme de signaux présents au point de test 8A, soit en sortie de la première bascule de la série de bascules 80 suite à la présence d'un signal SCMF de mise en fonctionnement, appelé "basculement" de la clef de contact K du véhicule automobile.

Sur cette même figure 2d, on a représenté ensuite les signaux présents aux points de test 8B et 8C présents respectivement aux sorties des deuxième et troisième bascules de l'ensemble de la série de bascules 80, les signaux présents aux point 8B et 8C étant obtenus par division de fréquence des signaux présents au point 8A.

Enfin, sur cette même figure 2d, on a représenté le signal SP correspondant au signal de préexcitation délivré en sortie de la porte NON-OU 81. Ce signal constitue le signal de rapport cyclique 1/8 permettant d'assurer la préexcitation de l'alternateur avant l'amorçage de celui-ci.

De la même manière, sur la figure 2e on a successivement représenté le signal de tension de phase alternateur présent sur la borne d'entrée phase 02, en particulier au point de test 02A. Ce signal étant représenté pour de très faibles vitesses de rotation, c'est-à-dire en début de rotation de l'alternateur pour des vitesses inférieures ou égales à 1000 tours/minute.

De la même manière, on a également représenté le signal présent au point de test 04A, c'est-à-dire en définitive sur la borne d'entrée 04 pendant la période de préexcitation. Dans ce cas, la tension appliquée sur la borne 04 est voisine de la tension de niveau bas permettant d'assurer l'éclairage de la lampe témoin LT.

Puis, sur la figure 2e, on a ensuite représenté la tension présente au point de test 6A, c'est-à-dire le signal SCE délivré par les moyens logiques de commande conventionnelle 6 lorsque le signal tension phase alternateur devient supérieur à la première valeur de seuil Vs0, c'est-à-dire lorsque l'amplitude du signal phase alternateur, amplitude crête à crête devient supérieur à 0,7 Volt. Dans ce cas, le comparateur 22 délivre le premier signal de détection PSD, lequel par l'intermédiaire de la porte NON-OU 60 se superpose au signal de préexcitation SP, ainsi que représenté sur la figure 2e au point de test 6A pour constituer le signal SCE, le signal SCAVE délivré par la porte NON-OU 60 étant successivement transmis par les portes NON-OU 61 et 63, la porte NON-OU 60 délivrant le signal de validation SCAVE à la porte NON-OU 61, laquelle transmet alors le signal de régulation SRE par l'intermédiaire de la porte NON-OU 63. Sur le chronogramme de la figure 2e représenté au point de test 6A, le rapport cyclique des signaux est voisin de 50 %, ce rapport cyclique étant engendré par le signal phase alternateur dont l'amplitude est supérieure à 0,7 Volt. Les pics présents pendant le niveau bas du signal SCENR sont provoqués par le signal de préexcitation SP toujours présent.

Dès ce moment là, la tension phase alternateur augmente très rapidement, selon un phénomène cumulatif, et atteint rapidement la valeur intermédiaire correspondant au seuil Vs1, cette valeur ayant été prise, à titre d'exemple non limitatif, égale sensiblement à 7 Volts. Le comparateur 23 déclenche et délivre le deuxième signal de détection DSD, ce signal sur basculement remettant à zéro les bascules 30, 31, 32, 33 de l'ensemble de bascules constituant les moyens de mémorisation 3 et de commande de l'excitation de l'inducteur de l'alternateur. Le signal $\overline{SAEP}$, délivré par la bascule 33 à travers l'inverseur I, constituant signal d'autorisation d'excitation plein champ, est alors transmis par la porte NON-OU 60 afin de permettre l'excitation plein champ de l'inducteur In de l'alternateur.

Pendant la phase de montée en tension de la tension phase alternateur, c'est-à-dire, préalablement à la période d'amorçage proprement dite de l'alternateur lors du déclenchement du comparateur 23, le signal de cadencement SCS provoque le changement d'état des bascules 40 à 42 jusqu'au passage à l'état 1 de la sortie de la bascule 42. Cet état 1 est conservé tant que la tension de phase alternateur Up reste inférieure à la tension de seuil Vs2. L'étape préalable à l'amorçage de l'alternateur correspondant à une absence de charge de la batterie, la tension effective UB de celle-ci est inférieure à sa tension nominale Un. Ces deux conditions Up < Vs2 et UB < Un provoquent l'allumage de la lampe témoin LT, LT = 1, comme lors de l'existance d'un défaut. Une telle phase préalable à l'amorçage de l'inducteur et de l'alternateur est représentée en figure 2e, la tension au point de test 04A correspondant à l'allumage de la lampe témoin LT.

Dès l'amorçage de l'alternateur, la tension de phase alternateur Up devient supérieure à la tension de seuil Vs2. Les deux conditions Up > Vs2 et UB < Un correspondent à l'extinction de la lampe témoin LT, LT = 0. Le régulateur régule selon une régulation à fréquence libre, le signal de régulation SRE délivré par le circuit de détection 1 permettant d'assurer une régulation correspondante de la tension d'alimentation de l'alternateur In.

Une description d'une variante de réalisation du régulateur plurifonction, objet de l'invention, sera maintenant donnée en liaison avec la figure 3a dans le cas où, selon un aspect avantageux non limitatif, le régulateur plurifonction, objet de l'invention, est muni d'un circuit de magnétisation de l'alternateur afin d'assurer, lors de la mise sous tension du régulateur, une magnétisation des circuits magnétiques de l'alternateur lorsque ce dernier est immobile.

Ainsi qu'on l'a représenté en figure 3a, le circuit 7 de magnétisation de l'alternateur entre en fonctionnement lors de la mise sous tension du régulateur par l'intermédiaire de l'alimentation à courant continu +Vcc délivrée par l'alimentation 07 déjà citée.

Ainsi qu'on l'a représenté en figure 3a, le circuit 7 de magnétisation comporte un ensemble d'une série de bascules bistables 70 et une porte NON-OU 71 dont une première entrée reçoit la sortie de la dernière bascule constitutive de l'ensemble de bascules 70 et dont une deuxième entrée reçoit le signal complémenté d'autorisation d'excitation plein champ $\overline{\text{SAEP}}$. La première entrée de la porte NON-OU 71 est reliée à une entrée d'une porte NON-ET 72 par l'intermédiaire d'un inverseur I. Une autre entrée de la porte NON-ET 72 reçoit un signal d'horloge à fréquence fixe, par exemple un signal d'horloge de fréquence 10 Hz ou de fréquence égal à CK/8. La sortie de la porte NON-ET 72 est reliée à l'entrée de commande de l'ensemble des bascules 70. L'ensemble des bascules 70 peut être constitué par une série de bascules JK. L'entrée de remise à zéro de la série de bascules 70 est reliée à la tension d'alimentation +Vcc par l'intermédiaire d'un circuit à capacité résistance et diode D permettant d'assurer le déclenchement et le positionnement à l'état zéro des sorties des bascules 70 lors de la mise sous tension du régulateur.

Bien entendu, le signal complémenté $\overline{\text{SAEP}}$ d'autorisation de mise à l'état plein champ de l'inducteur In permet l'inhibition du circuit de magnétisation 7 dès l'amorçage de l'alternateur. La porte NON-OU 71 délivre ainsi un signal de commande de magnétisation SCM, lequel permet d'assurer la magnétisation du circuit magnétique de l'alternateur lorsque ce dernier est immobile, ainsi qu'il sera décrit ci-après.

Dans ce but, la quatrième porte NON-OU 63 des moyens logiques 6 de commande comportent une entrée recevant le signal de commande de magnétisation SCM.

De même, le circuit logique de commande de visualisation de défaut 90 comporte une entrée recevant le signal de commande de magnétisation SCM afin d'éviter l'allumage de la lampe témoin LT lors d'un processus de magnétisation, ledit processus pouvant être réalisé sous tension élevée de l'ordre de 24 volts risquant de détruire la lampe témoin lorsque celle-ci est allumée. Ce circuit logique de commande de visualisation de défaut 90 permet alors, sur maintien du signal de commande d'existence conditionnelle de défaut SCED pendant une durée supérieure à la durée de temporisation, la commande de visualisation de défaut par allumage de la lampe témoin LT en fonction des valeurs de tension de batterie et de tension de phase alternateur selon la relation logique ci-après :

| UB \ Up | UB < Un | UB > Un |
|---|---|---|
| Up < Vs2 | LT = 1 | LT = 0 |
| Up > Vs2 | LT = 0 | LT = 1 |

Dans la relation précitée, Vs2 représente la valeur de tension de seuil de comparaison du circuit de détection de l'amplitude de la tension de phase alternateur, Un représente la tension nominale de la batterie, UB représente la tension effective de la batterie et Up la tension de phase alternateur. Les valeurs 1 indiquent la présence de défaut de charge de batterie, la lampe témoin LT étant allumée et les valeurs 0 représentent l'absence de défaut, la lampe témoin LT étant alors éteinte.

Afin d'assurer la relation logique précitée, le circuit logique de commande de visualisation de défaut 90 comporte avantageusement, ainsi que représenté en figure 3a, une porte logique 900A de type OU exclusif recevant sur une première entrée le signal SRE de régulation d'excitation sur la valeur crête et la valeur moyenne de la tension de batterie et sur une deuxième entrée le signal SPCD mémorisé du niveau de l'amplitude de la tension de phase alternateur. La porte OU exclusif 900A délivre un signal de présence conditionnelle de défaut SPCD1. En outre, le circuit de commande de visualisation de défaut 90 comporte une première porte logique 901 de type NON-OU recevant, d'une part, sur une première entrée par l'intermédiaire d'un inverseur I le signal de régulation d'excitation SRE sur la valeur crête et la valeur moyenne de la tension de batterie et, d'autre part, sur une deuxième entrée le signal SPE de présence ou d'absence d'excitation de l'inducteur de l'alternateur, puis sur une troisième entrée le signal de commande de magnétisation SCM. La première porte NON-OU 901 délivre un deuxième signal de présence conditionnelle de défaut SPCD2 délivré en l'absence de commande de magnétisation.

En outre, une deuxième porte 902 de type NON-OU est prévue pour constituer le circuit logique de commande de visualisation de défaut 90. Cette deuxième porte NON-OU 902 reçoit respectivement sur deux entrées les deux signaux de présence conditionnelle de défaut SPCD1 et SPCD2 et délivre ledit signal résultant d'existence conditionnelle de défaut de charge de batterie SCED.

Ainsi qu'on pourra le constater, tant sur la figure 2a ou 2b que sur la figure 3a, le circuit de temporisation 91 constitutif des moyens 9 de signalisation de défaut alternateur est constitué de manière classique par un ensemble de bascules de type JK en cascade 910, l'entrée de la dernière bascule recevant le signal SCED délivré par le circuit logique 90 et la sortie de cette même dernière bascule étant reliée par l'intermédiaire d'un inverseur I à une porte NON-ET 911, laquelle reçoit sur une autre entrée un signal d'horloge de fréquence CK/8 par exemple. En sortie de l'inverseur I, le signal délivré par le circuit de temporisation 91 correspond au signal SCED retardé d'une durée suffisante pour assurer l'existence effective d'un défaut alternateur, le signal délivré par le circuit de temporisation 91 correspondant au signal SPED.

Sur la figure 3b, on a également représenté un mode de réalisation avantageux non limitatif du circuit de commutation 92.

Celui-ci peut comporter avantageusement un étage de puissance 920 connecté par une diode 9200 à la borne 04 de lampe témoin en vue d'assurer l'alimentation d'une charge auxiliaire CA.

Le circuit de commutation 92 peut également comporter un étage 921 de commande de signalisation de défaut connecté à la borne d'alimentation 04 et permettant, sur présence d'un défaut, de porter la borne précitée à un potentiel voisin du potentiel de masse du régulateur selon l'invention. L'étage 921 peut, ainsi que représenté en figure 3b, consister en un transistor de commutation T921 dont la base est reliée par des résistances de polarisation R et une diode D921 en sortie de l'étage de puissance 920 en amont de la diode 9200 et dont le collecteur est relié par un pont de résistance à la cathode de cette même diode. La cathode de la diode 9200 est reliée à la borne 04 de la lampe témoin LT. Le collecteur du transistor T921, lequel est monté un émetteur commun, est relié à la base d'un transistor T922 de puissance, le transistor T922 étant relié en cascade à un transistor T923 dont la base est reliée au point intermédiaire des résistances du pont de résistance du collecteur de transistor T921 et au point milieu de diodes Zéner DZ923 et DZ922 connectées en parallèle sur les résistances R. Sur commutation de l'étage de puissance 920, le blocage des transistors T922, T923 assure l'application sur la borne 04 de la lampe témoin LT d'une tension voisine de la tension nominale de la batterie, alors que sur conduction des transistors T922, T923 le potentiel de la borne 04 est porté à un niveau bas permettant ainsi l'éclairage de la lampe témoin LT.

Une description plus détaillée du fonctionnement d'un régulateur plurifonction, objet de l'invention, tel que représenté par exemple en figure 2a ou en figure 3a, sera donnée en liaison avec les figures 4, 5a, 5b, 6a, 6b et 7 dans le cas de l'existence de défaut particulier intervenant au niveau du régulateur plurifonction selon l'invention ou dans le cas de mode de fonctionnement, tel que notamment la rerégulation de tension de phase alternateur en cas de suppression d'une charge d'utilisation importante par exemple.

Sur présence du défaut D précité, correspondant à la mise à l'état plein champ de l'inducteur In, ainsi que représenté en figure 4, la tension B+ alternateur présente sur la borne d'entrée 01, par exemple au point de test 01A, préalablement égale sensiblement à la tension nominale de la batterie, augmente.

De la même façon, la tension de phase alternateur présente sur la borne d'entrée 02, en particulier au point de test 02A, augmente également, ainsi que représenté en figure 4.

De la même manière, la tension, présente sur la borne d'entrée 04 de la lampe témoin LT et en particulier telle que représentée au point de test 04A, augmente également, la lampe LT étant éteinte. Cette augmentation se perpétue pendant la durée de temporisation de défaut introduite par le circuit de temporisation 91, lequel décale de la durée de temporisation l'apparition du signal SPED en sortie du circuit de temporisation 91. En fin de la durée de temporisation précitée, le signal SPED est délivré par le circuit de temporisation 91, ce signal déclenchant le circuit de commutation 92 pour appliquer à la borne 04 et, en définitive, au point de test 04A la tension de saturation de niveau bas des transistors T922 et T923 représentés en figure 3b. Dès la commutation précédente effectuée, la borne d'entrée 04 étant placée à un potentiel de niveau bas, la lampe LT s'allume, signalant ainsi le défaut précité sur l'inducteur In.

Pour mémoire, sur le dernier chronogramme de la figure 4, on a représenté le signal présent au point de test 03A, c'est-à-dire sur la borne d'entrée 03 de l'inducteur In préalablement à l'apparition du défaut D, le régulateur fonctionnant alors en régulateur à fréquence libre, ainsi que précédemment décrit, puis suite à l'apparition du défaut D, la tension appliquée sur l'inducteur In du fait de la présence du défaut étant alors égale à la tension B+ alternateur, ainsi que déjà mentionné précédemment.

Le régulateur plurifonction, objet de l'invention, permet ainsi de signaler l'existence d'un défaut de court-circuit de l'inducteur In à la tension B+ alternateur par exemple.

Sur les figures 5a, 5b, on a représenté l'évolution des signaux en différents points de test de la figure 2a ou 3a dans le cas de la suppression d'une charge d'utilisation importante sur délestage de la charge par exemple.

Sur la figure 5a, on a représenté, d'une part, le courant d'excitation de l'alternateur sur le délestage De précité. Le courant d'excitation, préalablement au délestage précité, correspondant à un courant de régulation à fréquence libre, ce même courant d'excitation décroissant de manière sensiblement exponentielle mais conservant une valeur sensiblement élevée pendant une durée d'environ 300 ms à partir de l'instant du délestage De.

Ainsi que représenté en outre en figure 5a, la tension de phase alternateur augmente rapidement à partir de l'instant du délestage De, puis diminue en fonction de la décroissance du courant d'excitation. En outre, la tension batterie, suite au délestage, augmente rapidement jusqu'à une valeur de l'ordre de 15 Volts pour diminuer ensuite lentement vers la valeur de la tension nominale de l'ordre de 14 Volts.

Conformément à un aspect particulièrement avantageux du régulateur plurifonction, objet de l'invention, celui-ci permet, grâce à la détection du signal de tension phase alternateur par rapport à la deuxième tension de référence Vr2 par l'intermédiaire du comparateur 23, d'empêcher la diminution de la tension de phase alternateur en deçà de la valeur de seuil Vs1, soit de la valeur 7 Volts sensiblement. Cette mesure se justifie afin d'assurer pour la tension phase alternateur une valeur minimale, laquelle sera respectée même en cas de délestage de charge du circuit d'utilisation.

Sur la figure 5b, on a représenté différents chronogrammes de signaux aux points de test 02A, 3A et 6B lors de l'existence d'un délestage De précédemment cité, le régulateur objet de l'invention assurant ainsi une rerégulation de la tension de phase alternateur correspondante.

Le chronogramme du signal présent sur la borne d'entrée de phase alternateur 02 et en particulier au point de test 02A présente une amplitude sensiblement constante régulée autour de la valeur moyenne 7 Volts correspondant à la valeur du seuil Vs1.

Le chronogramme présent au point de test 6B de la figure 5b représente le signal d'excitation SCRV délivré par la sortie de la porte NON-OU 62 à partir des moyens 3 de mémorisation et de commande de l'excitation de l'inducteur de l'alternateur sur déclenchement du comparateur 23 précité.

Le chronogramme présent au point de test 3A de la figure 5b représente enfin le deuxième signal de détection DSD délivré par le comparateur 23. Ce deuxième signal de détection précité est nul si la tension de phase de l'alternateur présente sur la borne d'entrée 02 est inférieure à VS1, et correspond à des impulsions synchrones du signal phase alternateur dans le cas contraire.

Lorsque la tension de phase de l'alternateur présente sur la borne d'entrée 02 est supérieure à VS1, le deuxième signal de détection DSD est constitué par des impulsions synchrones du signal phase alternateur, ainsi que représenté en figure 5b, et l'ensemble des bascules bistables 30, 31, 32 et 33 est continuellement remis à zéro. Le niveau zéro du signal SCR, en sortie de la bascule 32 est appliqué au signal SCRV après validation par l'inverseur I et la porte NON-OU 62. Le point de test 6B reste à l'état zéro, ce qui correspond à l'absence de commande de courant d'excitation. Ce courant d'excitation décroît alors tant que la tension de phase alternateur présente sur la borne d'entrée 02 reste supérieure à VS1.

Lorsque la tension de phase de l'alternateur devient inférieure à VS1 par manque de courant d'excitation, le deuxième signal de détection est à un niveau bas, ainsi que représenté en figure 5b, les bascules 30, 31, 32, 33 ne sont plus remises à zéro et continuent ainsi à défiler. Ce défilement est assuré par le signal SCS synchrone de l'alternateur. Le défilement des bascules 30 à 34 entraîne le passage au niveau 1 du signal SCR en sortie de la bascule 32. Ce niveau 1 est appliqué au signal SCRV après validation par l'inverseur I et la porte NON-OU 62. Le signal au point de test 6B passe au niveau 1 en provoquant la mise en charge de l'inducteur In tant que la tension de phase alternateur reste inférieure à VS1.

Ainsi, la tension de phase alternateur, présente sur la borne d'entrée 02 du régulateur, est rerégulée autour de la valeur de seuil VS1 selon le chronogramme 02A de la figure 5b.

Le cadencement de l'ensemble des bascules 30, 31, 32, 33 au moyen du signal de commande synchrone SCS de la rotation de l'alternateur est particulièrement avantageux pour les raisons ci-après.

Pour un alternateur donné, fonctionnant en régime de rerégulation de la tension de phase alternateur, la variation d'amplitude de celle-ci entre deux alternances successives est indépendante de la vitesse de rotation de l'alternateur. Si la période de rerégulation est fixe au niveau de la commande d'excitation, et que la vitesse de rotation de l'alternateur devient élevée, le nombre d'alternances de tension de phase alternateur contenues dans une période de rerégulation est très important. Par conséquent, les variations d'amplitude produisent, en s'ajoutant, des variations d'amplitude cumulées très importantes, de sorte que la rerégulation de la tension de phase alternateur n'est plus contrôlée. Il est donc nécessaire de diminuer le temps de réponse du dispositif assurant la fonction de rerégulation au fur et à mesure que la vitesse de l'alternateur augmente. Cette diminution du temps de réponse est obtenue en imposant une période de rerégulation inversement proportionnelle à la vitesse de rotation de l'alternateur. Autrement dit, la fréquence de la commande d'excitation de l'inducteur doit être proportionnelle ou sensiblement proportionnelle à la vitesse de rotation de l'alternateur. Le signal de cadencement synchrone validé SCSV, appliqué aux bascules 30 à 33, et synchrone de la rotation de l'alternateur, assure cette proportionnalité entre la fréquence de rerégulation de la tension de phase alternateur et la vitesse de rotation de l'alternateur. En effet, une augmentation de la vitesse de rotation de l'alternateur augmente la fréquence du signal de cadencement synchrone validé SCSV des bascules 30 à 33. Ces bascules 30 à 33 défilent plus rapidement, de sorte que le passage de l'amplitude de la tension phase à une valeur inférieure à la tension de seuil VS1 est détecté plus rapidement par le passage à l'état 1 du signal SCR en sortie de la bascule 32.

Le cadencement synchrone des bascules 30 à 33 permet donc un bon contrôle de l'amplitude de la tension phase lorsque le régulateur fonctionne en régime de rerégulation de cette tension de phase alternateur.

Un fonctionnement analogue peut être mis en évidence pour les bascules 40, 41, 42 assurant la mémorisation du signal mémorisé SPCD du niveau de l'amplitude de la tension phase alternateur pour la détection d'un défaut relatif à cette amplitude.

L'inverseur I recevant sur son entrée le signal SCR et la porte NON-OU 62 valident la transmission du signal SCR en interdisant une mise en charge prolongée de l'inducteur In lorsque l'amplitude de la tension de phase alternateur reste inférieure à la valeur de seuil VS1, malgré l'action du dispositif de rerégulation phase. Cette possibilité se présente en cas de défaut comme, par exemple, une rupture de la liaison entre l'alternateur et l'entrée de tension de phase alternateur du régulateur.

Le fonctionnement du régulateur plurifonction, objet de l'invention, tel que représenté en figures 2a et 3a, sera donné en liaison avec les figures 6a et 6b dans le cas où un défaut, tel qu'une coupure entre la borne d'entrée phase 02 et l'alternateur, est réalisé. Dans ce cas, ainsi que représenté en figure 6a, la tension phase alternateur est supprimée sur la borne 02 et en particulier au point de test 02A. Le défaut est noté C correspondant à une coupure. Préalablement à l'existence de la coupure C, le régulateur fonctionne en régulateur à fréquence libre, ainsi que décrit précédemment. Suite à l'apparition du défaut C, le premier signal de détection PSD est supprimé et le signal de commande synchrone SCS correspond alors au signal de fréquence fixe CK. Le deuxième signal de détection DSD étant également supprimé, la remise à zéro des bascules 30, 31, 32, 33 n'est plus assurée et le défilement des bascules 30 à 33 provoque le passage au niveau 1 du signal SCR en sortie de la bascule 32. Ce niveau 1 est transmis au signal SCRV au point de test 6B mettant en charge l'inducteur In de l'alternateur. En l'absence de remise à zéro des bascules 30 à 33, le signal SAEP passe également au niveau 1 en sortie de la bascule 33, avec un retard de 50 ms par rapport au signal SCR pour une fréquence d'horloge CK égale à 80 Hertz. Le basculement au niveau 1 du signal SAEP a pour action d'une part, d'arrêter le cadencement de l'ensemble des bascules 30 à 33 en empêchant la transmission du signal d'horloge CK à travers la porte ET 34, et, d'autre part, d'arrêter la commande d'excitation en forçant au niveau zéro le signal SCRV par l'intermédiaire de la porte NON-OU 62, au point de test 6B. Ainsi, tel qu'il apparaît sur le chronogramme 03A de la figure 6a, en cas de défaut, tel qu'une coupure entre la borne d'entrée phase 02 et l'alternateur, le régulateur effectue une tentative de rerégulation de la tension phase en chargeant l'inducteur pendant 50 ms, puis la commande d'excitation est bloquée afin de ne pas provoquer une surcharge importante et dangereuse de la batterie et du réseau de bord du véhicule.

Suite à cette suppression du signal d'excitation de l'inducteur, et lorsque la tension Ub de la batterie est inférieure à la tension nominale Un, seul le signal de préexcitation de rapport cyclique 1/8 est alors transmis par le circuit de préexcitation 8, les portes NON-OU 60, 61 et 63. Ainsi qu'on le remarque sur la figure 6a, l'excitation plein champ de l'inducteur In, suite à la présence du défaut C, a pour effet, d'une part, d'entraîner une augmentation de la tension batterie sur la borne 01A, cette tension batterie devenant supérieure à la tension nominale de 14 Volts et corrélativement d'entraîner, d'autre part, une légère augmentation de la tension appliquée sur la borne 04 au point de test 04A de la lampe témoin LT. Le retour de la tension batterie a une valeur inférieure à 14 Volts notée au point de test 01A sur la figure 6a, UB inférieur à 14 Volts, et l'absence de signal phase a pour effet, en raison du déclenchement du comparateur 24 lequel délivre pour le troisième signal de détection TSD un signal de niveau bas n'assurant plus la remise à zéro de l'ensemble des bascules 40, 41, 42 des moyens de mémorisation 4 du niveau d'amplitude de la tension de phase alternateur, d'assurer, par l'intermédiaire du signal SPCD et de la porte OU exclusif 900A, la commutation des moyens de commutation 92 et finalement l'allumage de la lampe témoin LT, ainsi qu'on l'a représenté relativement au chronogramme du signal présent au point de test 04A de la figure 6a.

Sur la figure 6b, on a représenté des chronogrammes relatifs à différents points de test dans le même cas de défaut de tension phase alternateur représenté précédemment dans le cadre de la figure 6a.

Ainsi, sur la figure 6b, on a représenté successivement le chronogramme des signaux au point de test 02A relativement à la coupure C de la tension de phase alternateur, puis le signal présent au point de test 4A des moyens 4 de mémorisation du niveau d'amplitude de la tension de phase alternateur, ce chronogramme représentant en fait le troisième signal de détection TSD. Ensuite, on a également représenté le signal présent au point de test 9A, c'est-à-dire le signal de commande d'existence conditionnelle de défaut SCED délivré par le circuit logique de commande de visualisation de défaut 90 et, en particulier, par la porte NON-OU 902 dans le cadre de la figure 2a ou de la figure 3a.

On a enfin représenté le signal présent sur la borne d'entrée de lampe témoin 04 au point de test 04A.

Suite à l'existence du défaut provoqué par la coupure C précitée, le troisième signal de détection TSD est supprimé, ce qui a pour effet, de remplacer les impulsions du signal SCED délivré par la porte NON-OU 902 par un signal de niveau haut constant, lequel n'assure la remise à zéro des bascules 910 de l'ensemble de bascules que tant que la tension de batterie reste supérieure à 14 Volts. Dès l'instant où la tension batterie devient inférieure à 14 Volts, la remise à zéro des bascules de l'ensemble des bascules 910 est supprimée et la temporisation de durée $\tau$ est décomptée, ce qui a pour effet d'engendrer le signal de déclenchement du circuit de commutation 92 au bout de la durée de temporisation $\tau$ et l'allumage de la lampe témoin LT par application sur la borne 04 d'entrée de lampe témoin d'une tension de niveau bas, ainsi que représenté en figure 6b.

Un autre mode de fonctionnement du régulateur plurifonction, objet de l'invention, sera donné en liaison avec la figure 7 dans le cas d'un défaut différent tel qu'une coupure C' entre la borne B+ alternateur et la borne d'entrée 01, cette borne étant plus communément appelée entrée "sense" dans le cas des figures 2a ou 3a.

Sur la figure 7, on a représenté, d'une part, le chronogramme relatif au point de test 01A, relatif à la tension B+ alternateur, le chronogramme relatif à la tension de phase alternateur au point de test 02A, le chronogramme relatif à la tension d'excitation de l'alternateur au point de test 03A et, bien entendu, le chronogramme relatif au signal appliqué sur la borne 04 d'entrée de lampe témoin au point de test 04A. Préalablement à l'existence du défaut de coupure C' dit "coupure de sense", la tension au point de test 01A passe à un niveau bas, ce qui a pour effet de supprimer la tension d'excitation, laquelle a été régulée préalablement à l'apparition de la coupure C' en régulation à fréquence libre. Le courant d'excitation est supprimé sur la borne 03A et la tension de phase alternateur décroît pour tendre vers une valeur correspondant à l'excitation rémanente de l'inducteur.

La lampe témoin LT, éteinte préalablement à l'apparition du défaut de coupure C', s'allume pratiquement dès l'apparition du défaut de coupure C' par alimentation à travers le circuit de commutation 92 rendu automatiquement passant lorsque la borne d'entrée 01 n'est plus alimentée.

On a ainsi décrit un régulateur plurifonction particulièrement performant dans lequel des défauts, aussi variés que la suppression de l'entrée phase alternateur, l'alimentation permanente plein champ de l'inducteur, la coupure de la borne "sense", sont signalés par la même lampe témoin. En outre, le régulateur plurifonction, objet de l'invention, est particulièrement avantageux en ce qu'il permet de prendre en compte si nécessaire des circuits auxiliaires, tels que des circuits de magnétisation de l'inducteur de l'alternateur, en l'absence de rotation de celui-ci.

Bien entendu, le régulateur plurifonction, objet de l'invention, est particulièrement avantageux en ce que les solutions proposées permettent une réalisation monolithique de l'ensemble du régulateur sur un même substrat de circuits intégrés.

Dans le cas du mode de réalisation de la figure 2b, le circuit d'interface peut être constitué par une puce séparée placée dans le même boîtier que la puce du régulateur proprement dit.

Les modes de réalisations décrits ne préjugent pas de modes de réalisation en technologie par éléments discrets, lesquels ne sortent pas du cadre de l'objet de la présente invention.

**Revendications**

1. Régulateur plurifonction de la tension d'excitation d'un alternateur de charge de batterie pour véhicule automobile, comprenant au moins une borne (01) d'entrée de tension de batterie, une borne (02) d'entrée de tension de phase alternateur, une borne (03) de sortie de régulation d'excitation de l'alternateur, une borne (04) de connexion d'une lampe témoin (LT) normalement connectée en série avec la clef de contact (K) du véhicule automobile et un circuit (05) de commande d'excitation de puissance de l'inducteur (In), ledit régulateur comprenant :

    - un circuit (1) de détection du niveau de tension batterie connecté à ladite borne (01) d'entrée de tension batterie, ledit circuit (1) délivrant, d'une part, un signal (SRAB) de rupture de la liaison alternateur-batterie (load dump) et, d'autre part, un signal de régulation d'excitation (SRE) sur la valeur crête et la valeur moyenne de la tension batterie,

- un circuit (2) de détection de l'amplitude de la tension de phase alternateur connecté à ladite borne (02) d'entrée de phase alternateur, ledit circuit (2) de détection permettant d'engendrer :

. un premier signal de détection (PSD) par rapport à une première valeur de seuil (VS0), correspondant à la mise en forme non mémorisée du signal de tension de phase alternateur disponible pour de très faibles vitesses de rotation de l'alternateur,

. un deuxième signal de détection (DSD) par rapport à une deuxième valeur de seuil (VS1) intermédiaire, ledit deuxième signal de détection (DSD) autorisant la mise à l'état plein champ de l'alternateur pendant le processus d'amorçage déclenché par le premier signal de détection (PSD),

. un troisième signal de détection (TSD) par rapport à une troisième valeur de seuil (VS2), voisine de la tension de régulation de la charge de la batterie, cette valeur indiquant le niveau de l'amplitude de la tension de phase alternateur pour la détection d'un défaut relatif à cette amplitude,

- des moyens (3) de mémorisation et de commande de l'excitation de l'inducteur de l'alternateur, lesdits moyens de mémorisation recevant ledit deuxième signal de détection (DSD) et délivrant un signal (SAEP) d'autorisation de mise à l'état plein champ au cours de l'amorçage de l'alternateur, et un signal de commande de rerégulation de la tension de phase alternateur (SCR) lors d'un délestage de charge sur le réseau alimenté par l'alternateur,

- des moyens logiques (6) de commande conditionnelle de la tension d'excitation de l'inducteur (In), caractérisé en ce que ledit signal de détection (PSD) autorise l'établissement d'un courant d'excitation à la fréquence et au rapport cyclique imposé par le signal de tension de phase alternateur appliqué à la borne (02) d'entrée de tension de phase alternateur, afin de déclencher le processus d'amorçage de l'alternateur, et en ce que le régulateur comprend en outre des moyens (5) de cadencement des moyens (3) de mémorisation et de commande de l'excitation de l'inducteur en synchronisme de la vitesse de rotation alternateur, lesdits moyens (5) de cadencement recevant ledit premier signal de détection (PSD) et un signal d'horloge de référence à fréquence fixe (CK), lesdits moyens (5) délivrant un signal de cadencement (SCS) synchrone de la vitesse de rotation de l'alternateur lorsque celui-ci est en rotation et un signal de cadencement à fréquence fixe lorsque l'alternateur est immobile.

2. Régulateur selon la revendication 1, caractérisé en ce qu'il comporte en outre un circuit (8) de commande de préexcitation, ledit circuit de commande de préexcitation recevant de la borne (04) de connexion de lampe témoin (LT) un signal de commande de mise en fonctionnement (SCMF) engendré par la clé de contact (K) lors de l'utilisation, par fermeture du contact (K) et délivrant auxdits moyens logiques (6) de commande un signal de préexcitation (SP) périodique de rapport cyclique 1/8 correspondant au régime de préexcitation de l'inducteur de l'alternateur.

3. Régulateur selon l'une des revendications 1 et 2, caractérisé en ce que lesdits moyens logiques (6) de commande conditionnelle comportent au moins :

- une première porte NON-OU (60) recevant sur ses entrées les conditions de validation d'excitation formées respectivement par :

. le signal de préexcitation (SP) délivré par le circuit (8) de préexcitation, dès fermeture de la clé de contact (K),

. le premier signal de détection de l'amplitude de la tension phase alternateur (PSD) apparaissant pour les très faibles vitesses de rotation de l'alternateur,

. le signal complémenté ($\overline{\text{SAEP}}$) d'autorisation de mise à l'état plein champ apparaissant à l'instant d'amorçage de l'alternateur et ne disparaissant normalement qu'à l'arrêt de la rotation alternateur, ladite première porte NON-OU (60) délivrant en sortie un signal (SCAVE) de commande de validation d'excitation,

- une deuxième porte NON-OU (61) recevant respectivement sur ses entrées le signal (SRE) de régulation d'excitation sur la valeur crête et la valeur moyenne de la tension batterie et le signal (SCAVE) de commande de validation d'excitation délivré par ladite première porte NON-OU (60), ladite deuxième porte NON-OU (61) délivrant en sortie un signal conditionnel d'excitation (SCE) fonction de la tension mesurée sur la batterie ou en sortie alternateur, ce signal correspondant au signal ($\overline{\text{SRE}}$) de régulation d'excitation complémenté lorsque le signal de commande de validation d'excitation (SCAVE) est à un niveau bas,

- une troisième porte NON-OU (62) recevant sur ses entrées respectivement, d'une part, le signal complémenté ($\overline{\text{SCR}}$) de commande de rerégulation de phase alternateur et, d'autre part, le signal (SAEP) d'autorisation de mise à l'état plein champ de l'inducteur (In), ladite troisième porte NON-OU (62) délivrant en sortie un signal (SCRV) de commande de rerégulation de tension de phase alternateur

17

validée, ledit signal de commande de rerégulation (SCRV) de la tension de phase alternateur étant limité dans le temps par le changement de niveau du signal d'autorisation de mise à l'état plein champ (SAEP) interdisant ainsi la poursuite de la rerégulation de tension de phase alternateur en cas de défaut sur le circuit (2) de détection de l'amplitude de la tension de phase alternateur ou de déconnexion de la borne d'entrée phase (02),

- une quatrième porte NON-OU (63) recevant au moins sur ses entrées ledit signal (SCE) conditionnel d'excitation délivré par la porte NON-OU (61) et ledit signal (SCRV) de commande conditionnelle de rerégulation de tension de phase validé, ladite quatrième porte NON-OU (63) délivrant un signal (SCENR) de commande d'excitation normale résultant au circuit (O5) de commande d'excitation de puissance de l'inducteur (In).

4. Régulateur selon l'une des revendications 1 à 3, caractérisé en ce qu'il comporte en outre des moyens (9) de signalisation de défaut alternateur.

5. Régulateur selon les revendications 1 à 4, caractérisé en ce qu'il comporte en outre un circuit (10) de détection d'excitation délivrant un signal (SPE) de présence ou d'absence d'excitation de l'alternateur.

6. Régulateur selon l'une des revendications 1 à 5, caractérisé en ce qu'il comporte en outre des moyens (4) de mémorisation du niveau d'amplitude de la tension de phase alternateur, lesdits moyens (4) de mémorisation, cadencés par les moyens (5) de cadencement, recevant ledit troisième signal de détection (TSD) et délivrant un signal mémorisé (SPCD) du niveau de l'amplitude de la tension phase alternateur pour la détection d'un défaut relatif à cette amplitude.

7. Régulateur selon les revendications 4, 5 et 6, caractérisé en ce que les moyens (9) de signalisation de défaut alternateur comprennent :
   - un circuit logique (90) de commande de visualisation de défaut alternateur permettant d'engendrer un signal de commande d'existence conditionnelle de défaut de charge de batterie (SCED), à partir du signal de régulation d'excitation (SRE) sur la valeur moyenne et la valeur crête de la tension batterie, du signal mémorisé du niveau d'amplitude de la tension de phase alternateur (SPCD) délivré par les moyens (4) de mémorisation du niveau d'amplitude de la tension de phase alternateur et du signal (SPE) délivré par ledit circuit (10) de détection d'excitation,
   - un circuit de temporisation (91) recevant ledit signal de commande d'existence conditionnelle de défaut alternateur (SCED) délivré par ledit circuit logique de commande de visualisation, et délivrant un signal de présence effective de défaut alternateur (SPED),
   - un circuit de commutation (92) recevant le signal de présence effective de défaut alternateur (SPED) et permettant l'alimentation ou la non alimentation de la borne (04) pour l'extinction ou l'allumage de la lampe témoin (LT) indicatrice de défaut alternateur.

8. Régulateur selon la revendication 7, caractérisé en ce que ledit circuit logique de commande de visualisation de défaut (90) permet, sur maintien du signal de commande d'existence conditionnelle de défaut (SCED) pendant une durée supérieure à la durée de temporisation, la commande de visualisation de défaut par allumage de la lampe témoin (LT) en fonction des valeurs de tension de batterie et des valeurs du signal de présence ou d'absence d'excitation (SPE) de l'inducteur selon la relation logique :

| UB / SPE | UB < Un | UB > Un |
|---|---|---|
| $\overline{Ex}$ | LT = 1 | LT = 0 |
| Ex | LT = 0 | LT = 1 |

relation dans laquelle Ex représente la présence d'un courant d'excitation, $\overline{Ex}$ l'absence d'un courant d'excitation, Un représente la tension nominale de la batterie, UB représente la tension effective de la batterie, les valeurs 1 indiquant la présence de défaut de charge batterie, la lampe témoin (LT) étant allumée, et les valeurs zéro représentant l'absence de défaut, la lampe témoin (LT) étant alors éteinte.

9. Régulateur selon la revendication 8, caractérisé en ce que ledit circuit logique de commande de visualisation de défaut (90) comporte:
   - une première porte logique (900A) de type OU exclusif recevant sur une première entrée le signal (SRE) de régulation d'excitation sur la valeur crête et la valeur moyenne de la tension batterie et sur une deuxième entrée ledit signal (SPCD) mémorisé du niveau de l'amplitude de la tension de phase alternateur, ladite porte OU exclusif (900A) délivrant un premier signal de présence conditionnelle de défaut (SPCD1),
   - une deuxième porte logique (900B) de type OU exclusif recevant sur une première entrée ledit signal (SRE) de régulation d'excitation sur la valeur crête et la valeur moyenne de la tension batterie et sur une deuxième entrée ledit signal (SPE) de présence ou d'absence d'excitation de l'inducteur, ladite deuxième porte OU exclusif (900B) délivrant un deuxième signal de présence conditionnelle de défaut (SPCD2),
   - une porte logique (902) de type NON-OU recevant respectivement sur deux entrées les deux signaux de présence conditionnelle de défaut (SPCD1, SPCD2) et délivrant ledit signal résultant d'existence conditionnelle de défaut de charge batterie (SCED).

10. Régulateur selon l'une des revendications 1 à 7, caractérisé en ce qu'il comporte en outre un circuit (7) de magnétisation de l'alternateur entrant en fonctionnement lors de la mise sous tension du régulateur et délivrant un signal (SCM) de commande de magnétisation aux moyens logiques de commande (6) pour commander l'établissement d'un courant d'excitation de l'inducteur (In) de l'alternateur dès la mise sous tension du régulateur pendant une durée suffisante pour magnétiser le circuit magnétique de l'alternateur lorsque ce dernier est immobile.

11. Régulateur selon la revendication 10, caractérisé en ce que le signal complémenté ($\overline{SAEP}$) d'autorisation de mise à l'état plein champ de l'inducteur permet l'inhibition du circuit de magnétisation (7) dès l'amorçage de l'alternateur.

12. Régulateur selon l'une des revendications 3 et 10 ou 11, caractérisé en ce que la quatrième porte NON-OU (63) des moyens logiques (6) de commande comporte une entrée recevant ledit signal (SCM) de commande de magnétisation.

13. Régulateur selon la revendication 7, caractérisé en ce que ledit circuit logique de commande de visualisation de défaut (90) permet sur maintien du signal de commande d'existence conditionnelle de défaut (SCED) pendant une durée supérieure à la durée de temporisation, la commande de visualisation de défaut par allumage de la lampe témoin (LT) en fonction des valeurs de tension de batterie et de tension de phase alternateur selon la relation :

| UB / Up | UB < Un | UB > Un |
|---|---|---|
| Up < Vs2 | LT = 1 | LT = 0 |
| Up > Vs2 | LT = 0 | LT = 1 |

relation dans laquelle Vs2 représente la valeur de tension de seuil de détection de l'amplitude de la tension de phase alternateur, Un représente la tension nominale de la batterie, UB la tension effective de la batterie et Up la tension de phase alternateur, les valeurs 1 indiquant la présence de défaut de charge batterie la lampe témoin (LT) étant allumée, et les valeurs zéro représentant l'absence de défaut la lampe témoin (LT) étant alors éteinte.

**14.** Régulateur selon la revendication 7 et l'une des revendications 10 à 12, caractérisé en ce que ledit circuit logique de commande de visualisation de défaut (90) comporte:
- une porte logique (900A) de type OU exclusif recevant sur une première entrée le signal (SRE) de régulation d'excitation sur la valeur crête et la valeur moyenne de la tension de batterie et sur une deuxième entrée ledit signal (SPCD) mémorisé du niveau de l'amplitude de la tension de phase alternateur, ladite porte OU exclusif (900A) délivrant un signal de présence conditionnelle de défaut (SPCD1),
- une première porte logique (901) de type NON-OU recevant, d'une part, sur une première entrée par l'intermédiaire d'un inverseur (I) ledit signal de régulation d'excitation (SRE) sur la valeur crête et la valeur moyenne de la tension de batterie, et, d'autre part, sur une deuxième entrée le signal (SPE) de présence ou d'absence d'excitation de l'inducteur de l'alternateur et enfin sur une troisième entrée le signal de commande de magnétisation (SCM), ladite première porte NON-OU (901) délivrant un deuxième signal de présence conditionnelle de défaut (SPCD2) validé par l'absence de magnétisation,
- une deuxième porte (902) de type NON-OU recevant respectivement sur deux entrées les deux signaux de présence conditionnelle de défaut (SPCD1, SPCD2) et délivrant ledit signal résultant d'existence conditionnelle de défaut de charge batterie (SECD).

**15.** Régulateur selon la revendication 7, caractérisé en ce que le circuit de commutation (92) comporte :
- un étage de puissance (920) connecté par une diode (9200) à ladite borne (04) de connexion d'une lampe témoin (LT) en vue d'assurer l'alimentation d'une charge auxiliaire,
- un étage (921) de commande de signalisation de défaut connecté à la borne (04) et permettant sur présence d'un défaut de porter ladite borne à un potentiel voisin du potentiel de masse.

**16.** Régulateur selon la revendication 1, caractérisé en ce que lesdits moyens (5) de cadencement des moyens de mémorisation et de commande de l'excitation de l'inducteur et des moyens de mémorisation du niveau d'amplitude de la tension de phase alternateur en synchronisme de la vitesse de rotation de l'alternateur comprennent une porte logique (50) de type OU exclusif recevant sur une première entrée un signal d'horloge de référence à fréquence fixe (CK) et sur une deuxième entrée ledit premier signal de détection (PSD) correspondant à la mise en forme non mémorisée du signal phase alternateur aux très faibles vitesses de rotation de l'alternateur et délivrant un signal de cadencement (SCS) synchrone de la vitesse de rotation alternateur auxdits moyens de mémorisation et de commande de l'excitation plein champ de l'inducteur de l'alternateur et de mémorisation du niveau d'amplitude de la tension phase alternateur.

**17.** Régulateur selon la revendication 1 ou 6, caractérisé en ce que lesdits moyens (3) de mémorisation et de commande de l'excitation de l'inducteur de l'alternateur et moyens (4) de mémorisation du niveau d'amplitude de la tension de phase alternateur comportent :

- une série de quatre respectivement trois bascules bistables (30 à 33), (40 à 42) de type JK connectées en cascade, les entrées de remise à zéro de chaque série de bascules recevant respectivement le deuxième (DSD) et le troisième (TSD) signal de détection,

- une porte logique de type NON-ET (34, 44) recevant sur une première entrée ledit signal de cadencement (SCS) synchrone de la vitesse de rotation alternateur et sur une deuxième entrée le signal de basculement délivré par la sortie de la quatrième (33) respectivement troisième (42) bascule de la série correspondante par l'intermédiaire d'un inverseur (I), ladite porte de type NON-ET (34, 44) délivrant en sa sortie, à l'entrée de cadencement desdites bascules de la série correspondante, ledit signal de cadencement synchrone validé (SCSV).

18. Régulateur selon la revendication 1, caractérisé en ce que ledit circuit (2) de détection de l'amplitude de tension de phase alternateur comporte :

- un circuit (20) de filtrage à résistance capacité comprenant une diode d'écrêtage (200), et délivrant à partir de la borne (02) d'entrée de tension de phase alternateur un signal de tension de phase alternateur filtré, ladite diode (200) écrêtant les surtensions parasites sur une capacité (201) conservant en mémoire la valeur maximale de l'amplitude de la tension de phase alternateur,

- un circuit d'alignement (21) recevant ledit signal de tension de phase alternateur filtré et délivrant un signal de tension de phase alternateur filtré dont les crêtes négatives sont alignées sur le potentiel de masse du dispositif,

- un premier comparateur de tension (22) recevant sur une première entrée positive une première tension de référence (Vr1) et sur une deuxième entrée négative ledit signal de tension de phase alternateur filtré aligné, ledit premier comparateur (22) délivrant en sa borne de sortie ledit premier signal de détection (PSD),

- un deuxième comparateur de tension (23) recevant sur une première entrée négative une deuxième tension de référence (Vr2) et sur une deuxième entrée positive ledit signal de tension de phase alternateur filtré aligné, ledit deuxième comparateur (23) délivrant en sa borne de sortie ledit deuxième signal de détection (DSD),

- un troisième comparateur de tension (24) recevant sur une première entrée négative une troisième tension de référence (Vr3) et sur une deuxième entrée positive ledit signal de tension de phase alternateur filtré aligné, ledit troisième comparateur (24) délivrant ledit troisième signal de détection (TSD).

19. Régulateur selon la revendication 18, caractérisé en ce que la deuxième tension de référence (Vr2) est supérieure à la valeur de crête des surtensions parasites appliquées sur la deuxième entrée du deuxième comparateur (23) lorsque l'alternateur ne tourne pas ou que la borne d'entrée phase alternateur (02) est déconnectée de l'alternateur afin de discriminer ces surtensions parasites du signal phase alternateur.

20. Régulateur selon la revendication 18, caractérisé en ce que la troisième tension de référence (Vr3) est supérieure à la valeur de crête de la tension de phase alternateur appliquée à la deuxième entrée du troisième comparateur (24) lorsque cette tension phase alternateur est obtenue, en l'absence de courant d'excitation, par la seule rémanence du circuit magnétique lorsque la vitesse de rotation de l'alternateur est maximale.

21. Régulateur selon la revendication 18, caractérisé en ce que lesdites tensions de référence (Vr1, Vr2, Vr3) sont engendrées à partir

. d'un générateur de tension de référence (VR) stabilisé en température,

. d'un diviseur potentiométrique (R1 à R4) alimenté par le générateur de tension de référence (VR).

22. Régulateur selon la revendication 1, caractérisé en ce que ledit circuit (1) de détection du niveau de tension batterie comprend :

- un circuit (1A) de détection et de mémorisation de valeur crête de la tension redressée appliquée à la batterie ;

- un premier comparateur (A2) recevant sur sa borne positive une valeur de seuil ou de consigne (VR) représentative de la tension de consigne de charge de batterie, et sur sa borne négative le signal alternateur filtré (Vs) ;

- un circuit de décharge constitué par un transistor de commutation (T1), la base dudit transistor étant reliée à la sortie dudit premier comparateur (A2) ;

- un circuit de temporisation imposant une fréquence maximale de régulation à résistance (R113) capacité (C1), ladite capacité (C1) étant connectée entre le collecteur et l'émetteur dudit transistor (T1) constituant circuit de décharge de cette capacité (C1) et ladite résistance (R113) constituant résistance de charge de ladite capacité (C1) ;
- un deuxième comparateur (A4) à double seuil dont la borne négative est directement connectée à la borne commune de la résistance (R113) et de ladite capacité (C1) et dont la borne positive est reliée au point intermédiaire d'un pont diviseur (R114, R115), la sortie dudit comparateur (A4) étant connectée en réaction sur ledit point intermédiaire au moyen d'une résistance (R116) ;
- un troisième comparateur (A3), ledit troisième comparateur recevant sur sa borne positive une valeur de seuil représentative de la valeur de crête de tension alternateur à ne pas dépasser et sur sa borne négative ledit signal enveloppe de valeur de crête (Vc) de la tension alternateur délivré par ladite borne de sortie (BS) du circuit de détection (1A), la sortie dudit troisième comparateur (A3) étant connectée à la base dudit transistor de commutation (T1).

23. Régulateur selon la revendication 22, caractérisé en ce que, en vue d'une réalisation monolithique sur un même substrat de matériau semi-conducteur, ledit circuit de mémorisation de valeur crête est constitué par un transistor (TA1), une capacité (C3) constituant circuit de mémorisation de l'enveloppe de valeur crête reliée, d'une part, à l'émetteur du transistor (TA1) par l'intermédiaire d'une résistance (R102) et, d'autre part, à la tension de référence (VM) du régulateur, un transistor étant prévu afin de compenser, à la décharge de la capacité (C3), la tension de jonction émetteur base introduite à la charge par le transistor (TA1).

## Patentansprüche

1. Mehrfunktionsregeleinrichtung für die Erregerspannung eines Batterieladewechselstromerzeugers für ein Kraftfahrzeug, enthaltend wenigstens eine Batteriespannungseingangsklemme (01), eine Wechselstromerzeuger-Phasenspannungseingangsklemme (02), eine Ausgangsklemme (03) zur Regelung dar Erregerspannung des Wechselstromerzeugers, eine Anschlußklemme (04) für eine Kontrollampe (KL), die normalerweise mit dem Zündschlüssel (Z) des Kraftfahrzeugs in Reihe geschaltet ist, und einen Erregersteuerkreis (05) für die Leistung des Feldmagneten (Fm), wobei die genannte Regeleinrichtung folgendes aufweist:
   - einen Erkennungskreis (1) für den Batteriespannungspegel, angeschlossen an die genannte Batteriespannungseingangsklemme (01), wobei der genannte Stromkreis (1) einerseits ein Unterbrechungssignal für die Verbindung Wechselstromerzeuger/Batterie (USWB) (load dump) und andererseits ein Erregungsregelsignal (ERS) für den Spitzenwert und den Mittelwert der Batteriespannung liefert,
   - einen Erkennungskreis (2) für die Amplitude der Wechselstromerzeuger-Phasenspannung, angeschlossen an die genannte Wechselstromerzeuger-Phaseneingangsklemme (02), wobei der genannte Erkennungsstromkreis (2) die Erzeugung folgender Signale ermöglicht:
      . eines ersten Erkennungssignals (EES) im Verhältnis zu einem ersten Schwellwert (SW0), entsprechend der nicht gespeicherten Aufbereitung des für die drei geringen Drehzahlen des Wechselstromerzeugers zur Verfügung stehenden Wechselstromerzeuger-Phasenspannungssignals,
      . eines zweiten Erkennungssignals (ZES) im Verhältnis zu einem dazwischenliegenden zweiten Schwellwert (SW1), wobei das genannte zweite Erkennungssignal (ZES) die Herstellung des vollen Erregungszustands des Wechselstromerzeugers während des Zündvorgangs, ausgelöst durch das erste Erkennungssignal (EES), ermöglicht,
      . eines dritten Erkennungssignals (DES) im Verhältnis zu einem dritten Schwellwert (SW2), der in der Nähe der Batterieladeregelspannung liegt, wobei dieser wert den Pegel der Amplitude der Wechselstromerzeuger-Phasenspannung zur Erkennung eines Fehlers im Verhältnis zu dieser Amplitude anzeigt,
   - Mittel (3) zur Speicherung und Steuerung der Erregung des Wechselstromerzeugerfeldmagneten, wobei die genannten Speichermittel das genannte zweite Erkennungssignal (ZES) empfangen und während der Zündung des Wechselstromerzeugers ein Freigabesignal zur Herstellung des vollen Erregungszustandes (FSVE) sowie ein Nachregelsteuersignal (NRS) für die Wechselstromerzeuger-Phasenspannung liefern, wenn es in dem vom Wechselstromerzeuger versorgten Netz zu einem Lastausfall kommt,
   - Logikmittel (6) für die bedingte Steuerung der Erregerspannung des Feldmagneten (Fm),
   **dadurch gekennzeichnet**, daß das genannte Erfassungssignal (EES) die Erzeugung eines Erregerstroms mit der Frequenz und dem zyklischen Verhältnis ermöglicht, die durch das an die Wechselstromerzeuger-Phasenspannungseingangsklemme (02) angelegte Wechselstromerzeuger-Phasenspannungssignal bestimmt werden, um den Zündvorgang des Wechselstromerzeugers auszulösen, und daß die Regeleinrichtung außerdem Mittel zur Taktsteuerung (5) der Mittel (3) zur Speicherung und Steuerung der Erregung des Feldmagneten in Angleichung an die Wechselstromerzeuger-Drehzahl enthält, wobei die genannten Mittel (5) zur Taktsteuerung das genannte erste Erkennungssignal (EES) und ein Festfrequenz-Taktbezugssignal (CK) empfangen und die genannten Mittel (5) ein Synchrontaktsignal (STS) der Drehzahl des Wechselstromerzeugers liefern, wenn dieser rotiert, sowie ein Festfrequenz-Taktsignal, wenn der Wechselstromerzeuger nicht rotiert.

2. Regeleinrichtung nach Anspruch 1, **dadurch gekennzeichnet**, daß sie außerdem einen Vorerregersteuerkreis (8) enthält, wobei der genannte Vorerregersteuerkreis von der Anschlußklemme (04) der Kontrollampe (KL) ein Einschaltsteuersignal (ESS), erzeugt bei Benutzung des Zündschlüssels (Z) durch Schließen des Kontakts (K), empfängt und den genannten Logiksteuermitteln (6) ein periodisches Vorerregersignal (VES) für das zyklische Verhältnis 1/8 entsprechend dem Vorerregungsbereich des Wechselbtromerzeuger-Feldmagneten liefert.

3. Regeleinrichtung nach einem der Ansprüche 1 und 2, **dadurch gekennzeichnet**, daß die genannten Logikmittel für die bedingte Steuerung (6) wenigstens folgendes enthalten:
   - einen ersten NEIN-ODER-Port (60), der über seine Eingänge die Erregervalidierungsbedingungen empfängt, bestehend aus:
      . dem Vorerregersignal (VES), welches vom Vorerregerkreis (8) bei Betätigung des Zündschlüssels (Z) geliefert wird,
      . dem ersten Erkennungssignal für die Amplitude der Wechselstromerzeuger-Phasenspannung (EES), welches bei den drei geringen Drehzahlen des Wechselstromerzeugers auftritt,
      . dem ergänzten Freigabesignal zur Herstellung des vollen Erregungszustandes ($\overline{FSVE}$), welches zum Zeitpunkt der Zündung des Wechselstromerzeugers auftritt und normalerweise erst wieder am Ende der Wechselstromerzeugerrotation verschwindet, wobei der genannte erste NEIN-ODER-Port (60) am Ausgang ein Erregungsvalidierungssteuersignal (EVSS) liefert,
   - einen zweiten NEIN-ODER-Port (61), der an seinen Eingängen das Erregungsregelsignal (ERS) für den Spitzenwert und den Mittelwert der Batteriespannung bzw. das Erregungsvalidierungssteuersignal (EVSS) empfängt, welches vom genannten ersten NEIN-ODER-Port (60) geliefert wird, während der genannte zweite NEIN-ODER-Port (61) am Ausgang ein bedingtes Erregersignal (BES) liefert, welches eine Funktion der an der Batterie oder am Wechselstromerzeugerausgang gemessenen Spannung ist, wobei dieses Signal dem ergänzten Erregungsregelsignal ($\overline{ERS}$) entspricht, wenn das Erregungsvalidierungssteuersignal (EVSS) ein geringes Niveau aufweist,
   - einen dritten NEIN-ODER-Port (62), der an seinen Eingängen einerseits das ergänzte Nachregelsteuersignal ($\overline{NRS}$) für die Wechselstromerzeugerphase und andererseits das Freigabesignal zur Herstellung des vollen Erregungszustandes (FSVE) für den Feldmagneten (Fm) empfängt, während der genannte dritte NEIN-ODER-Port (62) am Ausgang ein Nachregelsteuersignal für die validierte Wechselstromerzeuger-Phasenspannung (NRSV) liefert, wobei das genannte Nachregelsteuersignal für die validierte Wechselstromerzeuger-Phasenspannung (NRSV) zeitlich durch die Pegelveränderung des Freigabesignals zur Herstellung des vollen Erregungszustandes (FSVE) begrenzt wird, welches somit den Fortgang der Nachregelung der Wechselstromerzeuger-Phasenspannung unterbindet, falls am Erkennungskreis (2) für die Amplitude der Wechselstromerzeuger-Phasenspannung ein Fehler auftritt oder die Phaseneingangsklemme (02) abgeschaltet wird,
   - einen vierten NEIN-ODER-Port (63), der an seinen Eingängen wenigstens das genannte bedingte Erregersignal (BES) empfängt, welches vom NEIN-ODER-Port (61) geliefert wird, und das genannte Nachregelsteuersignal für die validierte Wechselstromerzeuger-Phasenspannung (NRSV), wobei der genannte vierte NEIN-ODER-Port (63) ein resultierendes normales Erregungssteuersignal (RNESS) an den Erregersteuerkreis (05) für die Leistung des Feldmagneten (Fm) liefert.

4. Regeleinrichtung nach einem der Ansprüche 1 bis 3, **dadurch gekennzeichnet**, daß sie außerdem Mittel (9) zur Signalisierung von Fehlern am Wechselstromerzeuger aufweist.

5. Regeleinrichtung nach den Ansprüchen 1 bis 4, **dadurch gekennzeichnet**, daß sie außerdem einen Erregungserkennungskreis (10) aufweist, der ein Signal für vorhandene oder nicht vorhandene Erregung (SVE) des Wechselstromerzeugers liefert.

6. Regeleinrichtung nach einem der Ansprüche 1 bis 5, **dadurch gekennzeichnet**, daß sie außerdem Mittel (4) zur Speicherung des Amplitudenpegels der Wechselstromerzeuger-Phasenspannung aufweist, wobei die genannten Mittel (4), die durch die Taktsteuerungsmittel (5) getaktet werden, das genannte dritte Erkennungssignal (DES) empfangen und ein Speichersignal für den Amplitudenpegel der Wechselstromerzeuger-Phasenspannung (SAPW) zur Erfassung eines Fehlers in Verbindung mit dieser Amplitude liefern.

7. Regeleinrichtung nach den Ansprüchen 4, 5 und 6, **dadurch gekennzeichnet**, daß die Mittel (9) zur Signalisierung eines Fehlers am Wechselstromerzeuger folgendes einschließen:

- einen Logiksteuerkreis (90) für die Darstellung des Wechselstromerzeugerfehlers, der die Erzeugung eines Steuersignals für das bedingte Vorliegen eines Batterieladefehlers (SBLF) erlaubt, ausgehend vom Erregungsregelsignal (ERS) auf den Mittelwert und den Spitzenwert der Batteriespannung, dem Speichersignal für den Amplitudenpegel der Wechselstromerzeuger-Phasenspannung (SAPW), welches von den Speichermitteln (4) für den Amplitudenpegel der Wechselstromerzeuger-Phasenspannung geliefert wird, und dem Signal (SVE), welches vom genannten Erregungserkennungskreis (10) geliefert wird,

- einen Verzögerungskreis (91), der das genannte Steuersignal für das bedingte Vorliegen eines Batterieladefehlers (SBLF) empfängt, welches vom genannten Logiksteuerkreis für die Darstellung geliefert wird, und der ein Signal für das effektive Vorliegen eines Wechselstromerzeugerfehlers (SEVW) liefert,

- einen Schaltkreis (92), der das Signal für das effektive Vorliegen eines Wechselstromerzeugerfehlers (SEVW) empfängt und die Speisung oder Nichtspeisung der Klemme (04) für das Aufleuchten oder Erlöschen der Kontrollampe (KL) zur Anzeige des Wechselstromerzeugerfehlers ermöglicht.

8. Regeleinrichtung nach Anspruch 7, **dadurch gekennzeichnet**, daß der genannte Logiksteuerkreis zur optischen Anzeige von Fehlern (90) bei Aufrechterhaltung des Steuersignals für das bedingte vorliegen eines Batterieladefehlers (SBLF) während eines Zeitraums, der die Dauer der Verzögerung überschreitet, die Steuerung der optischen Fehleranzeige durch das Aufleuchten der Kontrollampe (KL) entsprechend den Batteriespannungswerten und den werten des Signals für vorhandene bzw. nicht vorhandene Erregung (SVE) des Feldmagneten entsprechend nachstehender logischer Beziehung erlaubt:

$$UB$$

| SVE | $UB < Un$ | $UB > Un$ |
|-----|-----------|-----------|
| $\overline{Ex}$ | $KL = 1$ | $KL = 0$ |
| $Ex$ | $KL = 0$ | $KL = 1$ |

worin Ex das Vorliegen eines Erregerstroms, $\overline{Ex}$ die Abwesenheit eines Erregerstroms, Un die Nennspannung der Batterie, UB die effekte Batteriespannung darstellen und die Werte 1 das Vorliegen eines Batterieladefehlers anzeigen, wenn die Kontrollampe (KL) aufleuchtet, und die Nullwerte die Abwesenheit von Fehlern darstellen, wenn die Kontrollampe (KL) erloschen ist.

9. Regeleinrichtung nach Anspruch 8, **dadurch gekennzeichnet**, daß der genannte Logiksteuerkreis für die optische Fehleranzeige (90) folgendes enthält:

- einen ersten Logikport (900A) der exklusiven ODER-Funktion, der über einen ersten Eingang das Erregungsregelsignal (ERS) für den Spitzenwert und den Mittelwert der Batteriespannung und über einen zweiten Eingang das genannte Speichersignal für den Amplitudenpegel der Wechselspannungserzeuger-Phasenspannung (SAPW) empfängt, wobei der genannte exklusive ODER-Port (900A) ein erstes Signal für das bedingte Vorliegen eines Fehlers (SBVF1) liefert,

- einen zweiten Logikport (900B) der exklusiven ODER-Funktion, der über einen ersten Eingang das genannte Erregungsregelsignal (ERS) für den Spitzenwert und den Mittelwert der Batteriespannung und über einen zweiten Eingang das genannte Signal für vorhandene oder nicht vorhandene Erregung (SVE) des Feldmagneten empfängt, während der genannte zweite exklusive ODER-Port (900B) ein zweites Signal für das bedingte Vorliegen eines Fehlers (SBVF2) liefert,

- einen Logikport (902) vom Typ NEIN-ODER, der über zwei Eingänge die beiden Signale für das bedingte Vorliegen von Fehlern (SBVF1, SBVF2) empfängt und das genannte resultierende Signal für das bedingte Vorliegen eines Batterieladefehlers (RSLF) liefert.

10. Regeleinrichtung nach einem der Ansprüche 1 bis 7, **dadurch gekennzeichnet**, daß sie außerdem einen Magnetisierungskreis (7) für den Wechselstromerzeuger enthält, der beim Einschalten der Regeleinrichtung in Funktion tritt und ein Magnetisierungssteuersignal (MSS) an die Logiksteuerungsmittel (6) liefert, um die Erzeugung eines Erregerstroms des Feldmagneten (Fm) des Wechselstromerzeugers beim Einschalten der Regeleinrichtung während einer Zeitdauer zu steuern, die ausreicht, um den Magnetkreis des Wechselstromerzeugers zu magnetisieren, wenn dieser nicht in Bewegung ist.

11. Regeleinrichtung nach Anspruch 10, **dadurch gekennzeichnet**, daß das ergänzende Freigabesignal zur Herstellung des vollen Erregengszustandes (FSVE) des Feldmagneten die Sperrung des Magnetisierungskreises (7) ab Zündung des Wechselstromerzeugers ermöglicht.

12. Regeleinrichtung nach einem der Ansprüche 3 und 10 oder 11, **dadurch gekennzeichnet**, daß der vierte NEIN-ODER-Port (63) der Logiksteuerungsmittel (6) einen Eingang aufweist, der das genannte Magnetisierungssteuersignal (MSS) empfängt.

13. Regeleinrichtung nach Anspruch 7, **dadurch gekennzeichnet**, daß der genannte Logiksteuerkreis für die optische Darstellung von Fehlern (90) bei Aufrechterhaltung des Steuersignals für das bedingte Vorliegen eines Fehlers (SBLF) während eines Zeitraums, der die Verzögerungsdauer überschreitet, die Fehleranzeigesteuerung durch Aufleuchten der Kontrollampe (KL) entsprechend den Batteriespannungswerten und den Wechselstromerzeuger-Phasenspannungswerten gemäß nachfolgender Gleichung zuläßt:

```
         UB


Up                    UB  <  Un              UB  >  Un
     ---------------------------------------------------------------
Up    <  Sw2       KL  =  1                 KL  =  0
     ---------------------------------------------------------------
Up    >  Sw2       KL  =  0                 KL  =  1
     ---------------------------------------------------------------
```

worin in dieser Gleichung Sw2 den Spannungsschwellwert für die Erkennung der Amplitude der Wechselstromerzeuger-Phasenspannung, Un die Nennspannung der Batterie, UB die effektive Batteriespannung und und Up die Wechselstromerzeuger-Phasenspannung darstellen, während die Werte 1 das Vorliegen eines Batterieladefehlers anzeigen, wenn die Kontrollampe (KL) aufleuchtet, und die Nullwerte die Abwesenheit von Fehlern darstellen, wenn die Kontrollampe (KL) erloschen ist.

14. Regeleinrichtung nach Anspruch 7 und einem der Ansprüche 10 bis 12, **dadurch gekennzeichnet**, daß der genannte Logiksteuerkreis (90) folgendes aufweist:
- einen Logikport (900A) der exklusiven ODER-Funktion, der über einen ersten Eingang das Erregungsregelsignal (ERS) für den Spitzenwert und den Mittelwert der Batteriespannung und über einen zweiten Eingang das genannte Speichersignal für den Amplitudenpegel der Wechselspannungserzeuger-Phasenspannung (SAPW) empfängt, wobei der genannte exklusive ODER-Port (900A) ein Signal für das bedingte Vorliegen eines Fehlers (SBVF1) liefert,
- einen ersten Logikport (901) für NEIN-ODER-Funktion, der einerseits über einen ersten Eingang und mittels eines Umschalters (1) das genannte Erregungsregelsignal (ERS) für den Spitzenwert und den Mittelwert der Batteriespannung und andererseits über einen zweiten Eingang das Signal für vorhandene oder nicht vorhandene Erregung (SVE) des Feldmagneten des Wechselstromerzeugers und schließlich über einen dritten Eingang das Magnetisierungssteuersignal (MSS) empfängt, wobei der genannte NEIN-ODER-Port (901) ein zweites Signal für das bedingte Vorliegen von Fehlern (SBVF2), validiert durch die Abwesenheit der Magnetisierung, liefert,
- einen zweiten Port (902) vom Typ NEIN-ODER, der über zwei Eingänge die beiden Signale für das bedingte Vorliegen von Fehlern (SBVF1, SBVF2) empfingt und das genannte resultierende Signal für das bedingte Vorliegen eines Batterieladefehlers (RSLF) liefert.

15. Regeleinrichtung nach Anspruch 7, **dadurch gekennzeichnet**, daß der Schaltkreis (92) folgendes enthält:
- eine Leistungsstufe (920), die über eine Diode (9200) mit der genannten Anschlußklemme (04) für eine Kontrollampe (KL) verbunden ist, um die Speisung einer Hilfslast sicherzustellen,
- eine Fehlersignalsteuerstufe (921), die an die Klemme (04) angeschlossen ist und es im Falle eines Fehlers ermöglicht, die genannte Klemme auf ein Potential zu bringen, welches in Nähe des Massepotentials liegt.

16. Regeleinrichtung nach Anspruch 1, **dadurch gekennzeichnet**, daß die genannten Taktsteuerungsmittel (5), die Mittel zur Speicherung und Steuerung der Erregung des Feldmagneten und die Mittel zur Speicherung des Amplitudenpegels der Wechselstromerzeuger-Phasenspannung in Synchronisation mit der Drehzahl des Wechselstromerzeugers folgendes einschließen: einen Logikport (50) für die exklusive ODER-Funktion, der über einen ersten Eingang ein Festfrequenz-Taktbezugssignal (CK) und über einen zweiten Eingang das genannte erste Erkennungssignal (EES) empfängt, welches der nicht gespeicherten Aufbereitung des Wechselstromerzeuger-Phasensignals bei den äußerst geringen Drehzahlen des Wechselstromerzeugers entspricht, und ein Synchrontaktsignal (STS) für die Wechselstromerzeuger-Drehzahl an die genannten Mittel zur Speicherung und Steuerung der vollen Erregung des Wechselstromerzeuger-Feldmagneten und zur Speicherung des Amplitudenpegels der Wechselstromerzeuger-Phasenspannung liefert.

17. Regeleinrichtung nach Anspruch 1 oder 6, **dadurch gekennzeichnet**, daß die genannten Mittel (3) zur Speicherung und Steuerung der Erregung des Wechselstromerzeuger-Feldmagneten und die Mittel (4) zur Speicherung des Amplitudenpegels der Wechselstromerzeuger-Phasenspannung folgendes enthalten:
- eine Serie von vier bzw. drei bistabilen Kippgliedern (30 bis 33), (40 bis 42) vom Typ JK in Kaskadenschaltung, wobei die Eingänge für die Nullstellung jeder Kippgliedserie das zweite (ZES) und das dritte (DES) Erkennungssignal empfangen,
- einen Logikport für NEIN-UND-Funktion (34, 44), der über einen ersten Eingang das genannte Synchrontaktsignal (STS) für die Wechselstromerzeuger-Drehzahl und über einen zweiten Eingang das Kippsignal empfängt, welches vom Ausgang des vierten (33) bzw. des dritten (42) Kippglieds der entsprechenden Serie über einen Umschalter (I) geliefert wird, wobei der genannte Port für NEIN-UND-Funktion (34, 44) über seinen Ausgang an den Takteingang der genannten Kippglieder der entsprechenden Serie das genannte validierte Synchrontaktsignal (VSTS) liefert.

18. Regeleinrichtung nach Anspruch 1, **dadurch gekennzeichnet**, daß der genannte Erkennungskreis (2) für die Amplitude der Wechselstromerzeuger-Phasenspannung folgendes enthält:
- einen Filterkreis (20) mit Kondensator-Widerstand, der eine Amplitudenbegrenzerdiode (200) enthält und, ausgehend von der Eingangsklemme (02) für die Wechselstromerzeuger-Phasenspannung, ein filtriertes Wechselstromerzeuger-Phasenspannungssignal liefert, wobei die genannte Diode (200) die Störüberspannung an einem Kondensator (201) begrenzt, der den Maximalwert der Amplitude der Wechselstromerzeuger-Phasenspannung speichert,
- einen Ausgleichkreis (21), der das genannte filtrierte Wechselstromerzeuger-Phasenspannungssignal empfängt und ein filtriertes Wechselstromerzeuger-Phasenspannungssignal liefert, dessen negative Spitzen am Massepotential der Vorrichtung ausgerichtet werden,
- einen ersten Spannungskomparator (22), der über einen ersten Pluseingang eine erste Bezugsspannung (Bs1) und über einen zweiten Minuseingang das genannte ausgeglichene, filtrierte Wechselstromerzeuger-Phasenspannungssignal empfängt, wobei der genannte erste Komparator (22) über meine Ausgangsklemme das genannte erste Erkennungssignal (EES) liefert,
- einen zweiten Spannungskomparator (23), der über einen ersten Minuseingang eine zweite Bezugsspannung (Bs2) und über einen zweiten Pluseingang das genannte ausgeglichene, filtrierte Wechselstromerzeuger-Phasenspannungssignal empfängt, wobei der genannte zweite Komparator (23) über seine Ausgangsklemme das genannte zweite Erkennungssignal (ZES) liefert,
- einen dritten Spannungskomparator (24), der über einen ersten Minuseingang eine dritte Bezugsspannung (Bs3) und über einen zweiten Pluseingang das genannte ausgeglichene, filtrierte Wechselstromerzeuger-Phasenspannungssignal empfängt, wobei der genannte dritte Komparator (24) das ge-

EP 0 330 561 B1

nannte dritte Erkennungssignal (DES) liefert.

19. Regeleinrichtung nach Anspruch 18, **dadurch gekennzeichnet**, daß die zweite Bezugsspannung (Bs2) über dem Spitzenwert der Störüberspannungen liegt, die an den zweiten Eingang des zweiten Komparators (23) angelegt sind, wenn der Wechselstromerzeuger nicht rotiert oder wenn die Wechselstromerzeuger-Phaseneingangsklemme (02) vom Wechselstromerzeuger getrennt ist, um diese Störüberspannungen vom Wechselstromerzeuger-Phasensignal zu unterscheiden.

20. Regeleinrichtung nach Anspruch 18, **dadurch gekennzeichnet**, daß die dritte Bezugsspannung (Bs3) über dem Spitzenwert der Wechselstromerzeuger-Phasenspannung liegt, die an den zweiten Eingang des dritten Komparators (24) angelegt ist, wenn diese Wechselstromerzeuger-Phasenspannung in Abwesenheit eines Erregerstroms bei maximaler Wechselstromerzeuger-Drehzahl nur durch die Remanenz des Magnetkreises erzeugt wird.

21. Regeleinrichtung nach Anspruch 18, **dadurch gekennzeichnet**, daß die genannten Bezugsspannungen (Bs1, Bs2, Bs3) erzeugt werden
    . durch einen temperaturstabilisierten Bezugsspannungsgenerator (BS),
    . durch einen potentiometrischen Spannungsteiler (R1 bis R4), der vom Bezugsspannungsgenerator (BS) gespeist wird.

22. Regeleinrichtung nach Anspruch 1, **dadurch gekennzeichnet**, daß der genannte Erkennungskreis (1) für den Batteriespannungspegel folgendes enthält:
    - einen Schaltkreis (1A) für die Erkennung und Speicherung des Spitzenwerts der an die Batterie angelegten gleichgerichteten Spannung,
    - einen ersten Komparator (A2), der über seine Plusklemme einen Schwell- oder Sollwert (Sw), der für die Sollspannung der Batterieladung repräsentativ ist, und über seine Minusklemme das filtrierte Wechselstromerzeuger-Signal (Sw) empfängt,
    - einen Entladungskreis, bestehend aus einem Schalttransistor (T1), wobei die Basis des genannten Transistors mit dem Ausgang des genannten ersten Komparators (A2) verbunden ist,
    - einen Verzögerungskreis zur Erzeugung einer max. Regelfrequenz mit Widerstand (R113)-Kondensator (C1), wobei der genannte Kondensator (C1) zwischen den Kollektor und den Emitter des genannten Transistors (T1) geschaltet ist, der den Entladungskreis dieses Kondensators (C1) bildet, und wobei der genannte Widerstand (R113) das Lastwiderstand des genannten Kondensators (C1) bildet,
    - einen zweiten Komparator (A4) mit doppeltem Schwellwert, dessen Minusklemme direkt an die gemeinsame Klemme des Widerstands (R113) und des genannten Kondensators (C1) angeschlossen ist und dessen Plusklemme mit dem Zwischenpunkt eines Spannungsteilers (R114, R115) verbunden ist, wobei der Ausgang des genannten Komparators (A4) mit dem genannten Zwischenpunkt über einen Widerstand (R116) reaktiv verbunden ist,
    - einen dritten Komparator (A3), wobei der genannte dritte Komparator über seine Plusklemme einen Schwellwert empfängt, der für den nicht zu überschreitenden Spitzenwert der Wechselstromerzeuger-Spannung repräsentativ ist, und über die Minusklemme das Spitzenwert-Hüllsignal (Sp) der Wechselstromerzeuger-Spannung, welches von der genannten Ausgangsklemme (AK) des Erkennungskreises (1A) geliefert wird, wobei der Ausgang des genannten dritten Komparators (A3) mit der Basis des genannten Schalttransistors (T1) verbunden ist.

23. Regeleinrichtung nach Anspruch 22, **dadurch gekennzeichnet**, daß der genannte Spitzenwertspeicherkreis im Hinblick auf eine monolithische Ausführung auf dem gleichen Halbleitersubstrat aus einem Transistor (TA1) besteht, wobei ein Kondensator (C3) den Speicherkreis für die Spitzenwerthülle bildet, die einerseits über einen Widerstand (R102) an den Emitter des Transistors (TA1) und andererseits an die Bezugsspannung (Bs) der Regeleinrichtung angeschlossen ist, wobei ein Transistor vorgesehen ist, um bei Entladung des Kondensators (C3) die bei Belastung von Transistor (TA1) eingeführte Emitter-Basis-Übergangsspannung auszugleichen.

## Claims

1. Plurifunction device for regulating the excitation voltage of an alternator for charging the battery of an automobile vehicle, comprising at least a battery voltage input (01), an alternator phase voltage input ( 02),

27

an alternator excitation regulation output (03), a terminal (04) adapted to be connected to an indicator lamp (LT) wired in series with an ignition switch (K) of the vehicle, a field coil (In) power excitation control circuit (05), a battery voltage sensing circuit (1) connected to said battery voltage input (01) adapted to supply a signal (SRAB) indicating that the alternator-battery connection is broken and an excitation regulation signal (SRE) related to the peak value and the average value of the battery voltage, an alternator phase voltage amplitude sensing circuit (2) connected to said alternator phase voltage input (02) adapted to supply a first sensing signal (PSD) relative to a first threshold value (VSO) corresponding to non-memorized shaping of the alternator phase voltage signal at very low alternator rotation speeds, a second sensing signal (DSD) relative to an intermediate second threshold value (VS1) authorizing application of a full-field condition to the alternator during the cutting in process initiated by said first sensing signal (PSD) and a third sensing signal (TSD) relative to a third threshold value (VS2) near the battery charge regulation voltage and indicating the alternator phase voltage amplitude for sensing faults relating to said amplitude, alternator field coil excitation control and memory means (3) adapted to receive said second sensing signal (DSD) and adapted to supply a signal (SAEP) authorizing said full-field condition during cutting in of the alternator and an alternator phase voltage regulation control signal (SCR) during load dumping in the circuit supplied by the alternator, conditional field coil (In) excitation voltage control logic means (6), characterized in that said first sensing signal (PSD) authorizes the establishing of an excitation current with a frequency and a cyclic ratio imposed by the alternator phase voltage signal applied to the alternator phase voltage input to initiate cutting in of the alternator, and in that the regulator further comprises timing means (5) for said field coil excitation control and memory means synchronized to the alternator rotation speed adapted to receive said first sensing signal (PSD) and a fixed-frequency reference clock signal (CK) and adapted to supply a timing signal (SCS) synchronized to the alternator rotation speed when the alternator is rotating or a fixed-frequency timing signal when the alternator is stationary.

2. Regulator device according to claim 1 further comprising a pre-excitation control circuit (8) adapted to receive from said indicator lamp (LT) terminal (04) a start signal (SCMF) in response to operation of the ignition switch (K) of the vehicle and adapted to supply a periodic pre-excitation signal (SP) with a cyclic ratio of 1/8 corresponding to a pre-excitation condition of said field coil.

3. Regulator device according to any one of claim 1 or 2 wherein said conditional control logic means (6) comprise a first NOR gate (60) adapted to receive on respective inputs excitation enabling signals comprising said pre-excitation signal (SP) supplied by said pre-excitation circuit (8) when said ignition switch (K) is operated, the first alternator phase voltage amplitude sensing signal (PSD) appearing at very low alternator rotation speeds and the complemented signal ($\overline{SAEP}$) authorizing application of the full-field condition appearing immediately the alternator cuts in and normally disappearing only when the alternator stops rotating and adapted to supply at its output an excitation enabling control signal (SCAVE), a second NOR gate (61) adapted to receive on respective inputs the excitation regulation signal (SRE) related to the peak value and the average value of the battery voltage and the excitation enabling control signal (SCAVE) supplied by said first NOR gate (60), said second NOR gate (61) being adapted to supply at its output a conditional excitation signal (SCE) conditioned by the voltage measured at the battery or at the alternator output and corresponding to the complemented excitation regulation signal ($\overline{SRE}$) when the excitation enabling control signal (SCAVE) is at a low level, a third NOR gate (62) adapted to receive on respective inputs the complemented alternator phase regulation control signal ($\overline{SCR}$) and the signal (SAEP) authorizing application of the full-field condition to the field coil (In) and adapted to supply at its output an enabled alternator phase voltage regulation control signal (SCRV) which is delimited temporally by a change in the level of the signal authorizing application of the full-field condition to prevent further alternator phase voltage regulation in the event of a fault in the alternator phase voltage amplitude sensing circuit (2) or disconnection of the phase input (02), and a fourth NOR gate (63) adapted to receive on respective inputs said conditional excitation signal (SCE) supplied by said second NOR gate (61) and said enabled phase voltage regulation conditional control signal (SCRV) and adapted to supply at its output to the field coil (In) power excitation control circuit (05) a resultant normal excitation control signal (SCENR).

4. Regulator device according to any one of claims 1 to 3 further comprising alternator fault indication means (9).

5. Regulator device according to any one of claims 1 to 4 further comprising an excitation sensing circuit (10) adapted to supply a signal (SPE) indicating the presence or absence of alternator excitation.

6. Regulator device according to any one of claim 1 to 5 further comprising alternator phase voltage amplitude memory means (4) timed by said timing means (5) and adapted to receive said third sensing signal (TSD) and to supply a memorized alternator phase voltage amplitude signal (SPCD) for sensing faults relating to said amplitude.

7. Regulator device according to claim 4 further comprising an excitation sensing circuit (10) adapted to supply a signal (SPE) indicating the presence or absence of alternator excitation and alternator phase voltage amplitude memory means (4) timed by said timing means (5) and adapted to receive said third sensing signal (TSD) and to supply a memorized alternator phase voltage amplitude signal (SPCD) for sensing faults relating to said amplitude, wherein said alternator fault indication means comprise an alternator fault indication control logic circuit (90) adapted to derive a battery charge fault conditional presence control signal (SCED) from the excitation regulation signal (SRE) related to the average value and the peak value of the battery voltage, the memorized alternator phase voltage amplitude signal (SPCD) supplied by the alternator phase voltage amplitude memory means (4) and the signal (SPE) supplied by said excitation sensing circuit (10), a time-delay circuit (91) adapted to receive said alternator fault conditional presence control signal (SCED) supplied by said indication control logic circuit (90) and adapted to supply an alternator fault actual presence signal (SPED) and a switching circuit (92) adapted to receive said alternator fault actual presence signal (SPED) and to energize selectively said indicator lamp (LT) terminal (04) to turn said indicator lamp on and off.

8. Regulator device according to claim 7 wherein said fault indication control logic circuit (90) is adapted to respond to said fault conditional presence signal (SCED) being present for longer than the time-delay of said time-delay circuit by turning on said indicator lamp (LT) selectively depending on the battery voltage and the value of said signal (SPE) indicating presence or absence of field coil excitation, as defined in the following table :

| SPE \ UB | UB < Un | UB > Un |
|---|---|---|
| $\overline{Ex}$ | LT = 1 | LT = 0 |
| Ex | LT = 0 | LT = 1 |

where Ex represents the presence of excitation current, $\overline{Ex}$ represents the absence of excitation current, Un represents the nominal battery voltage, UB represents the actual battery voltage, the values LT = 1 represent presence of a battery charge fault (and that the indicator lamp LT is turned on) and the values LT = 0 represents absence of any battery charge fault (and that the indicator lamp LT is turned off).

9. Regulator device according to claim 8 wherein said fault indication control logic circuit (90) comprises a first exclusive-OR gate (900A) adapted to receive on a first input the regulation signal (SRE) related to the peak value and the average value of the battery voltage and on a second input said memorized alternator phase voltage amplitude signal (SPCD) and adapted to supply at its output a first conditional fault presence signal (SPCD1), a second exclusive-OR gate (900B) adapted to receive on a first input the regulation signal (SRE) related to the peak value and the average value of the battery voltage and on a second input said signal (SPE) indicating presence or absence of field coil excitation and adapted to supply at its output a second conditional fault presence signal (SPCD2), and a NOR gate (902) adapted to receive on respective inputs said first and second conditional fault presence signals (SPCD1, SPCD2) and to supply at its output said resultant battery charge fault conditional presence signal (SCED).

10. Regulator device according to any one of claims 1 to 7 further comprising an alternator magnetization circuit (7) adapted to operate in response to application of voltage to the regulator and to supply a magnetization control signal (SCM) to said control logic means (6) to command the establishing of an excitation current in said field coil (In) immediately voltage is applied to the regulator and for sufficient time to magnetize the magnetic circuit of the alternator when the alternator is stationary.

11. Regulator device according to claim 10 wherein the complemented signal ($\overline{SAEP}$) authorizing application

of the full-field condition to said field coil is adapted to inhibit said magnetization circuit immediately the alternator cuts in.

12. Regulator device according to any one of claims 3 and 10 or 11, wherein said fourth NOR gate (63) of said control logic means (6) has an input adapted to receive said magnetization control signal (SCM).

13. Regulator device according to claim 7 wherein said fault indication control logic circuit (90) is adapted to respond to presence of said fault conditional presence control signal (SCED) for longer than the time-delay of said time-delay circuit by commanding a fault indication by turning on said indicator lamp (LT) depending on the battery voltage and the alternator phase voltage as defined in the following table :

| UB<br>Up | UB < Un | UB > Un |
|---|---|---|
| Up < Vs2 | LT = 1 | LT = 0 |
| Up > Vs2 | LT = 0 | LT = 1 |

where Vs2 reprsents the alternator phase voltage amplitude sensing threshold voltage, Up represents the alternator phase voltage, Un represents the nominal battery voltage, UB represents the actual battery voltage, the values LT = 1 represent the presence of a battery charge fault (and that the indicator lamp LT is turned on) and the values LT = 0 represent the absence of any battery charge fault (and that the indicator lamp LT is turned off).

14. Regulator device according to claim 7 and any one of claims 10 to 12 further comprising an alternator magnetization circuit (7) adapted to operate in response to application of voltage to the regulator and to supply a magnetization control signal to said control logic means to command the establishing of an excitation current in said field coil immediately voltage is applied to the regulator and for sufficient time to magnetize the magnetic circuit of the alternator when the alternator is stationary, wherein said fault indication control logic circuit ( 90) comprises an exclusive-OR gate (900A) adapted to receive on a first input the excitation regulation signal (SRE) related to the peak value and the average value of the battery voltage and on a second input said memorized alternator phase voltage amplitude signal (SPCD) and to supply at its output a first conditional fault presence signal (SPCD1), a first NOR gate (901) adapted to receive on a first input the complemented excitation regulation signal (SRE) related to the peak value and the average value of the battery voltage and on a second input the signal (SPE) indicating presence or absence of field coil excitation and on a third input the magnetization control signal (SCM) and adapted to supply at its output a second conditional fault presence signal (SPCD2) enabled by absence of magnetization, and a second NOR gate (902) adapted to receive on respective inputs said first and second conditional fault presence signals (SPCD1, SPCD2) and to supply at its output said resultant battery charge fault conditional presence signal (SECD).

15. Regulator device according to claim 7 wherein said switching circuit (92) comprises a power stage (920), a diode (9200) connecting said power stage (920) to said indicator lamp (LT) terminal (04) to enable an auxiliary load to be supplied therefrom and a fault indication control stage (921) connected to said indicator lamp (LT) terminal (04) and adapted to apply thereto a potential near the ground potential when a fault is present.

16. Regulator device according to claim 1 wherein said means (5) for timing said field coil excitation control and memory means and said alternator phase voltage amplitude memory means synchronized to the alternator rotation speed comprise an exclusive-OR gate (50) adapted to receive on a first input a fixed-frequency reference clock signal (CK) and on a second input said first sensing signal (PSD) corresponding to non-memorized shaping of the alternator phase signal at very low alternator rotation speeds and adapted to supply at its output to said field coil full-field excitation control and memory means and to said alternator phase voltage amplitude memory means a timing signal (SCS) synchronized to the alternator rotation speed.

17. Regulator device according to claim 1 or 6 wherein said field coil excitation control and memory means (3) and said alternator phase voltage amplitude memory means (4) comprise respective series of four and three JK bistables (30 to 33, 40 to 42) connected in cascade with the reset to zero inputs of the respective series of bistables adapted to receive the second (DSD) and third (TSD) sensing signals, and a NAND gate (34, 44) adapted to receive on a first input said timing signal (SCS) synchronized to the alternator rotation speed and on a second input the complemented output signal from the final bistable of the corresponding series and adapted to supply at its output to the timing inputs of said bistables of the corresponding series said enabled synchronized timing signal (SCSV).

18. Regulator device according to claim 1 wherein said alternator phase voltage amplitude sensing circuit (2) comprises a resistor-capacitor filter circuit (20) including a clipping diode (200) and adapted to supply from the alternator phase voltage input (02) a filtered alternator phase voltage signal, said diode (200) clipping spurious overvoltages on a capacitor (201) adapted to memorize the maximum value of the alternator phase voltage amplitude, an alignment circuit (21) adapted to receive said filtered alternator phase voltage signal and to supply an aligned filtered alternator phase voltage signal with its negative peaks aligned with the ground potential of the device, a first voltage comparator (22) adapted to receive on a positive first input a first reference voltage (Vr1) and on a negative second input said aligned filtered alternator phase voltage signal and adapted to supply at its output said first sensing signal (PSD), a second voltage comparator (23) adapted to receive on a negative first input a second reference voltage (Vr2) and on a positive second input said aligned filtered alternator phase voltage signal and adapted to supply at its output said second sensing signal (DSD), and a third voltage comparator (24) adapted to receive on a negative first input a third reference voltage (Vr3) and on a positive second input said aligned filtered alternator phase voltage signal and to supply at its output said third sensing signal (TSD).

19. Regulator device according to claim 18 wherein said second reference voltage (Vr2) is greater than the peak value of spurious overvoltages applied to the second input of the second comparator (23) when the alternator is not rotating or if the alternator phase input (02) is disconnected from the alternator, whereby it is possible to distinguish between such spurious overvoltages and the alternator phase signal.

20. Regulator device according to claim 18 wherein said third reference voltage (Vr3) is greater than the peak value of the alternator phase voltage applied to the second input of the third comparator (24) when the alternator phase voltage is obtained in the absence of any excitation current only by virtue of the remanence of the magnetic circuit when the alternator rotation speed is maximal.

21. Regulator device according to claim 18 wherein said reference voltages Vr1, Vr2, Vr3 are produced by a temperature-stabilized reference voltage generator (VR) and a potentiometer divider (R1 to R4) connected to the output of said reference voltage generator (VR).

22. Regulator device according to claim 1 wherein said battery voltage sensing circuit (1) comprises a circuit (1A) for sensing and memorizing the peak value of the rectified voltage applied to the battery, a first comparator (A2) adapted to receive on a positive terminal a threshold or set point value representing the battery charge set point voltage and on a negative terminal the filtered alternator signal (Vs), a discharge circuit comprising a switching transistor (T1) with its base connected to the output of said first comparator (A2), a resistor-capacitor (R113,C1) time-delay circuit imposing a maximum regulation frequency, the capacitor (C1) of said resistor-capacitor circuit being connected between the collector and the emitter of said transistor constituting the capacitor discharge circuit and the resistor (R113) of said resistor-capacitor circuit constituting a charging resistor for said capacitor (C1), a double-threshold second comparator (A4) with a negative terminal connected direct to the common point of the resistor (R113) and the capacitor (C1) of said resistor-capacitor circuit and a positive terminal connected to the intermediate point of a divider bridge (R114,R115) and an output connected in a feedback loop to said intermediate point through a resistor (R116), and a third comparator (A3) adapted to receive on a positive terminal a threshold value representative of a peak alternator voltage (Vc) that is not to be exceeded and on a negative terminal (BS) said envelope signal of the alternator voltage peak value supplied by said output terminal of the sensing circuit, the output of said third comparator (A3) being connected to the base of said switching transistor (T1).

23. Regulator device according to claim 22 wherein to enable monolithic integrated circuit implementation on a single semiconductor material substrats said peak value memory circuit comprises a transistor (TA1), a capacitor (C3) constituting the peak value envelope memory circuit connected to the emitter of the transistor (TA1) through a resistor (R102) and to the regulator reference voltage (VM), and a transistor for compensating during discharging of the capacitor (C3) the emitter-base junction voltage introduced during charging by the transistor (TA1).

## FIG.1a

MONOFONCTION

## FIG.1b

## FIG.1c

Multifonction

## FIG.1d

FIG_2a

**FIG_2b**

Fréquence
de
cadencement

f

SCS

PSD

ω
Vitesse de rotation
alternateur

## FIG.2c

8A)

8B)

8C)

8D)

## FIG.2d

## FIG_2e

FIG_3a

## FIG.3b

## FIG.4

DEFAUT DE MISE A L'ETAT PLEIN CHAMP
DE L'INDUCTEUR In

FIG.5a

EP 0 330 561 B1

## FIG_5b

## FIG.6a

FIG_6b

FIG_7